(19) Europäisches Patentamt

European Patent Office

Office européen des brevets

(11) EP 0 962 871 B1

(12) EUROPEAN PATENT SPECIFICATION

(45) Date of publication and mention
of the grant of the patent:
**02.06.2004 Bulletin 2004/23**

(51) Int Cl.7: **F02D 41/26**, F02D 41/14

(21) Application number: **99110668.3**

(22) Date of filing: **02.06.1999**

(54) **Data estimation method in engine control**

Methode zur Schätzung von Daten in einer Motorsteuerung

Méthode d'évaluation de données pour la commande d'un moteur

(84) Designated Contracting States:
**DE FR GB IT**

(30) Priority: **02.06.1998 JP 15285598**

(43) Date of publication of application:
**08.12.1999 Bulletin 1999/49**

(73) Proprietor: **YAMAHA HATSUDOKI KABUSHIKI KAISHA**
Iwata-shi Shizuoka-ken (JP)

(72) Inventor: **Yamaguchi, Masashi**
Iwata-shi, Shizuoka-ken (JP)

(74) Representative: **Grünecker, Kinkeldey, Stockmair & Schwanhäusser Anwaltssozietät**
**Maximilianstrasse 58**
**80538 München (DE)**

(56) References cited:
US-A- 5 307 276    US-A- 5 524 599
US-A- 5 755 212    US-A- 5 954 783

- **PATENT ABSTRACTS OF JAPAN vol. 1995, no. 01, 28 February 1995 (1995-02-28) & JP 06 299892 A (MITSUBISHI ELECTRIC CORP), 25 October 1994 (1994-10-25)**
- **PATENT ABSTRACTS OF JAPAN vol. 1998, no. 05, 30 April 1998 (1998-04-30) & JP 10 011106 A (YAMAHA MOTOR CO LTD), 16 January 1998 (1998-01-16)**

**Description**

This invention relates to a data estimation method for controlling an engine using data on at least the state of the engine as control parameters

Control of an engine is generally practiced by detecting with sensors the data on the state of the engine (state of the engine in operation such as the engine revolution and engine temperature, and the user's sensory evaluation values on the state of the engine) and using such detected pieces of information as control parameters.

There are various purposive types of information in relation to the state of the engine for use as control parameters. Not all of them can be detected with sensors that are disposed in the engine to be mounted on a vehicle. In some cases, a problem is that the sensors are expensive even if they can be mounted on the vehicle. Another problem is that the number of sensors increase when a sensor is used for every piece of information for use as a control parameter.

Specifically for example, the problems with the air flow meter and the heat wire anemometer for detecting the intake air rate are that they are expensive, large-sized, and vulnerable to salt damage and therefore cannot be mounted on outboard motors.

Furthermore, there is no sensor capable of measuring the rate of fuel that is injected from a fuel injection device of an intake pipe injection type of engine and adhering to the intake pipe, or there is no sensor capable of measuring the evaporation speed of fuel adhering to the intake pipe.

Furthermore, while the amount of torque variation can be measured with a torque sensor attached to the crankshaft of the engine, a problem is that the sensor is too expensive and large-sized to be a commercially available article.

Furthermore, while the combustion chamber temperature can be measured with a special thermometer in a laboratory or the like, a problem is that there is no sensor that is so small, inexpensive, and durable that it can be mounted on individual engines.

Furthermore, while the intake pipe wall temperature can be measured simply by installing a sensor in any position at will, the location to be measured changes according to the operation state of the engine. Therefore, to cover all such locations, sensors must be disposed on all over the intake pipe wall surface and it is practically impossible to collect satisfactory information with the sensors.

Still another problem is that the sensor capable of detecting the exhaust air-fuel ratio is, though available, expensive.

There is no sensor capable of measuring the air-fuel ratio around the ignition point of the plug of the in-cylinder injection type of engine.

Furthermore, the device for measuring the amount of NOx contained in exhaust gas in the catalyst system has a problem that it is large-sized and expensive and so cannot be mounted on each vehicle.

Still another problem is that there is no sensor that can directly detect the sensory evaluation values of the user for the state of the engine. Therefore, the user must record his or her feelings as the evaluation values for use in the engine control and it is very difficult to control individual vehicles based on such sensory evaluation values.

US-A-5 954 783 (see also JP-A-10 122 017) describes a control system for determining a fuel injection actuating volume. The determined volume is supplied to a fuel injector. For the determination of the volume, a model-based controller is employed. The model-based controller determines a base parameter in accordance with engine parameters. Some parameters are not detected from the engine but estimated based on the model. For predicting the engine behavior, the model-based controller includes fuzzy neural networks.

Accordingly, it is an objective of the present invention to provide a data estimation method as indicated above which always ensures a reliable provision of control parameters without the need to use expensive and/or large-sized sensors for detecting the operation state of an engine.

This is achieved by the features of claim 1.

According to another embodiment of the present invention, the control parameter is the intake air rate, whereas the input information includes a plural number of data on at least the intake air vacuum of the engine. This has the effect that the intake air rate may be estimated by using a small-sized inexpensive vacuum sensor instead of using an air flow meter or a heat wire anemometer which cannot be used on board an outboard or the like because of its high price, large size and vulnerability to salt damage.

A further embodiment of the present invention is characterized in that the control parameter is the fuel adhesion rate in an intake pipe injection type of engine and that the input information includes at least one of the engine revolution, intake air rate, and intake air vacuum.

It is further possible that the control parameter is the evaporation time constant in an intake pipe injection type of engine, whereas the input information includes at least one of the intake pipe wall temperature, engine revolution, intake air rate and intake air vacuum.

Both of these embodiments have the effect that the rate of fuel injected from the fuel injection device and adhering to the intake pipe wall, etc. in the intake pipe injection type of engine and the rate of fuel evaporating from the fuel adhering to the intake pipe wall, etc. that have been difficult to be detected heretofore, may be simply estimated. As a result, a sequential model of the engine may be simply constituted in the control device.

A further embodiment of the present invention is characterized in that the control parameter is the amount of variation in torque, and that the input information includes at least one of the variation in engine revolution, engine revolution, intake air rate, and time sequential data of the combustion chamber pressure.

This has the effect that the variation in torque that has been calculated from the variation in the engine revolution which has a non-linear relationship with the torque variation may be estimated with a better accuracy.

A still further embodiment of the present invention is characterized in that the control parameter is the combustion chamber temperature, and that the input information includes at least one of the intake pipe wall temperature, ambient temperature of the intake pipe wall, and the time elapsed from the start of the engine.

This has the effect that the combustion chamber temperature for which no sensor has existed is so small, inexpensive and durable as to be mounted on each engine may be estimated with a better accuracy. Since the estimated value may be used as a control parameter, fine control of an engine becomes possible such as controlling the fuel injection rate according to the combustion temperature.

Another embodiment of the present invention is characterized in that the control parameter is the intake pipe wall temperature, and that the input information includes at least one of the cooling water temperature, cylinder block temperature, and oil temperature.

This has the effect that the intake pipe wall temperature, for which the location to be measured changes according to the state of the engine operation, may be estimated with a good accuracy corresponding to the engine operation state from moment to moment.

A further embodiment of the present invention is characterized in that the control parameter is the exhaust air-fuel ratio, and that the input information includes at least one of the time sequential data of the crank angle speed, engine revolution, intake air rate, intake air vacuum, ignition timing, opening and closing timings of intake and exhaust valves and in that a variable valve timing device is used, and EGR valve opening in the case an EGR control is used.

A still further embodiment of the present invention is characterized in that the control parameter is the exhaust air-fuel ratio, and that the input information includes at least one of the exhaust temperature, atmospheric temperature, engine revolution, intake air rate, intake air vacuum, ignition timing, and the throttle valve opening.

These two embodiments have the effect that the exhaust air fuel ratio may be estimated using an existing, inexpensive sensor instead of an expensive air-fuel ratio sensor.

Another embodiment of the present invention is characterized in that the control parameter is the air-fuel ratio around the plug ignition point in the in-cylinder injection type of engine, and that the input information includes at least one of the engine revolution, throttle opening, fuel injection rate, fuel injection timing, ignition timing, and opening and closing timings of intake and exhaust vales in the case a variable valve timing device is used.

This has the effect that the air-fuel ratio around the plug ignition point in an in-cylinder injection type of engine, that has been so far impossible to be measured, may be estimated and the fuel injection rate into the cylinder may be controlled more accurately.

A further embodiment of the present invention is characterized in that the control parameter is the air-fuel ratio around the plug ignition point in the in-cylinder injection type of engine, and that the input information includes at least one of the engine revolution, throttle opening, fuel injection rate, fuel injection timing, ignition timing, and opening and closing timings of intake and exhaust vales in the case a variable valve timing device is used.

This has the effect that the amount of NOx content in the exhaust in the exhaust catalyst system that has been impossible to be measured may be estimated and the engine may be controlled to improve combustion efficiency.

A still further embodiment of the present invention is characterized in that the control parameter is the sensory evaluation value about the engine state, and that the input information includes at least one of the user's data on the pulses, heartbeats, blood pressures, breathing intervals, brain waves, etc.

This has the effect that the sensory evaluation values of the user that have been impossible to measure with sensors or the like may be estimated according to information collected with existing sensors for collecting physiological data such as the user's pulses, heartbeats, blood pressures, breathing intervals, and brain waves. Specifically for example, in the case the air-fuel ratio is controlled using an oxygen sensor, the ease of driving may be prevented from becoming poor by controlling an $0_2$ feedback gain according to the sensory evaluation value so that hunting of air-fuel ratio caused by the $0_2$ feedback is not transmitted to the user and a jerky feeling to the user is prevented.

Another embodiment of the present invention is characterized in that the input information is assumed to be the input candidate data that can be the input data to the fuzzy neural network, information on adoption or non-adoption of the input candidate data is coded using a hereditary algorithm to make a plural number of individuals, and the individuals are made to evolve according to estimation accuracy using the hereditary algorithm, so thatat least the number and the types of the input data to the fuzzy neural network are optimized. This has the effect that since the input data to be actually used may be optimized using a plural number of input candidate data, the selection of the input data is not dependent on the user's experience or knowledge and therefore, more appropriate input data may be obtained, and the time and trouble for selecting the input data may be saved.

Other preferred embodiments of the present invention are laid down in further dependent claims.

In the following, the present invention is explained in greater detail with respect to several embodiments thereof in conjunction with the accompanying drawings, wherein:

FIG. 1 is a general drawing showing the relationship between an engine 1 and a control device 10 capable of carrying out the air-fuel ratio control employing the optimization method for the fuzzy neural network according to the invention;

FIG. 2 is a general block diagram showing the constitution of the control device 10;

FIG, 3 is a general block diagram showing the constitution of the engine revolution calculating section;

FIG. 4 is a general block diagram showing the constitution of the data processing section;

FIG. 5 is a general block diagram showing the constitution of the model base control section;

FIG. 6 shows the internal constitution of the intake air rate estimating section;

FIG. 7 is a flow chart of the optimization process for the fuzzy neural network using a hereditary algorithm;

FIG. 8 is a conceptual drawing showing the relationship between the gene information to be coded in an optimization process and the coded individuals;

FIG. 9 shows the internal constitution of the intake fuel rate estimating section;

FIG. 10 shows the internal constitution of the fuel adhesion rate estimating section;

FIG. 11 shows the internal constitution of the evaporation time constant estimating section;

FIG. 12 shows the internal constitution of the estimated air-fuel ratio calculating section;

FIG. 13 is a general block diagram showing the constitution of the target air-fuel ratio calculating section;

FIG. 14 is a general block diagram showing the constitution of the internal feedback calculating section;

FIG, 15 is a general block diagram showing the constitution of the learning signal calculating section;

FIG. 16 is a general block diagram of the second embodiment of the control device constituted to carry out the optimization process for the fuzzy neural network during the execution of control under the same conditions as in the first embodiment;

FIG. 17 shows the internal constitution of the data processing section of the second embodiment;

FIG. 18 is a general block diagram showing the constitution of the model base control section of the second embodiment;

FIG. 19 is a general block diagram showing the constitution of the intake air rate calculating section of the second embodiment;

FIG. 20 is a general block diagram showing the constitution of the learning and evaluation signal calculating section of the second embodiment;

FIG. 21 is a conceptual drawing showing another embodiment of the method of generating individuals in the optimization process;

FIG, 22 shows in (1) the input-output relationship of a basic form of the fuzzy neural network, and in (2) and (3) applied forms of the fuzzy neural network.

FIG. 23 shows an example of the fuzzy neural network for estimating the amount of torque variation;

FIG, 24 shows an example of the fuzzy neural network for estimating the engine combustion chamber temperature;

FIG, 25 shows an example of the fuzzy neural network for estimating the intake pipe wall temperature;

FIG, 26 shows an example of the fuzzy neural network for estimating the exhaust air-fuel ratio;

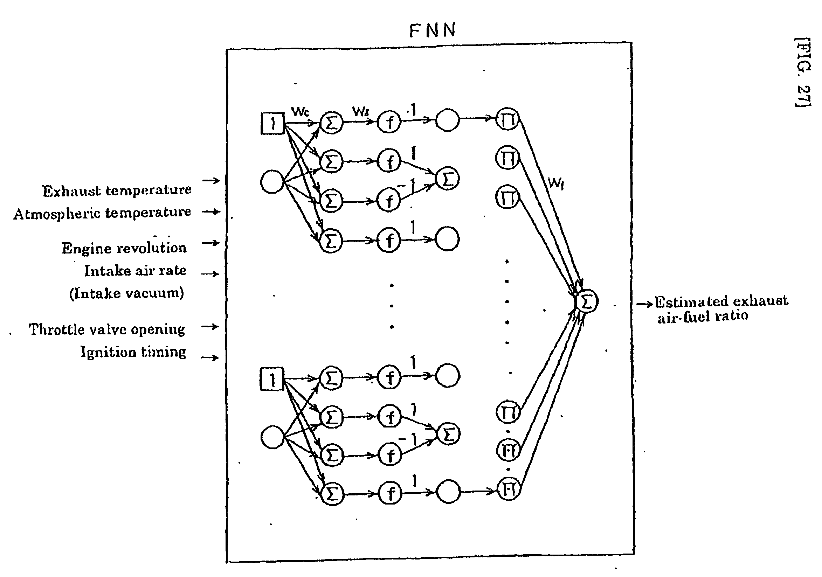

FIG. 27 shows an example of the fuzzy neural network for estimating the exhaust air-fuel ratio;

FIG, 28 shows an example of the fuzzy neural network for estimating the air-fuel ratio around the plug ignition point in an in-cylinder injection type of engine;

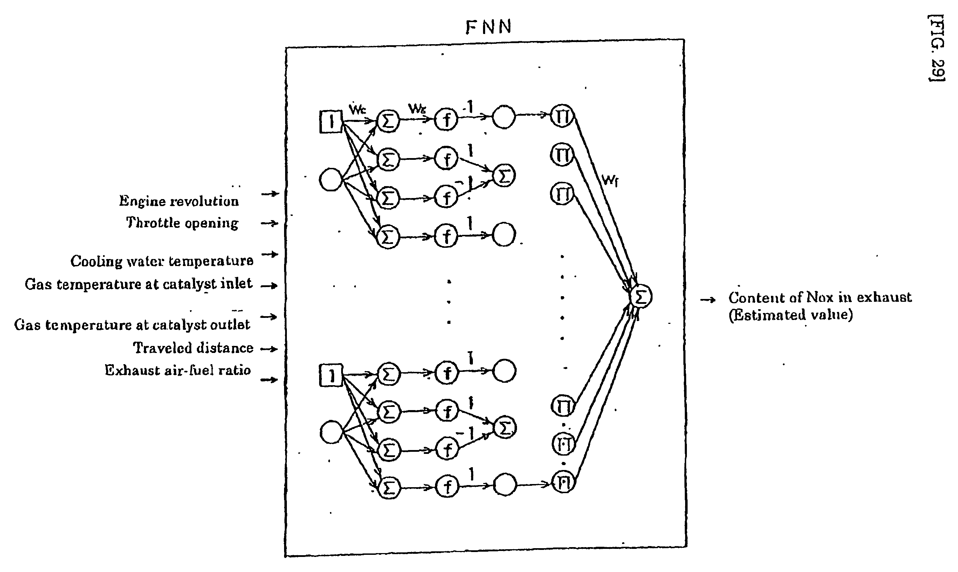

FIG. 29 shows an example of the fuzzy neural network for estimating the content of NOx in the exhaust gas in the exhaust catalyst system; and

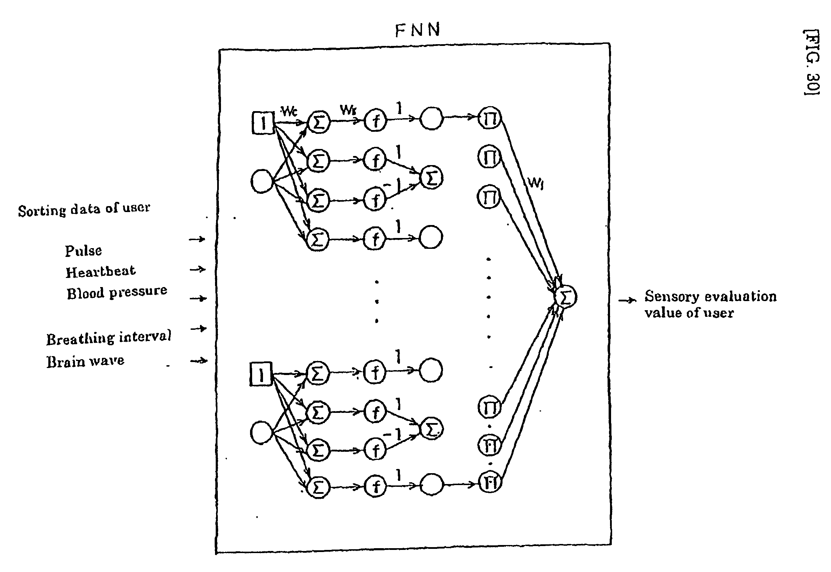

FIG. 30 shows an example of the fuzzy neural network for estimating the user's sensory evaluation values.

Embodiments of the data estimation method for engine control according to the invention will be hereinafter described with reference to the appended drawings,

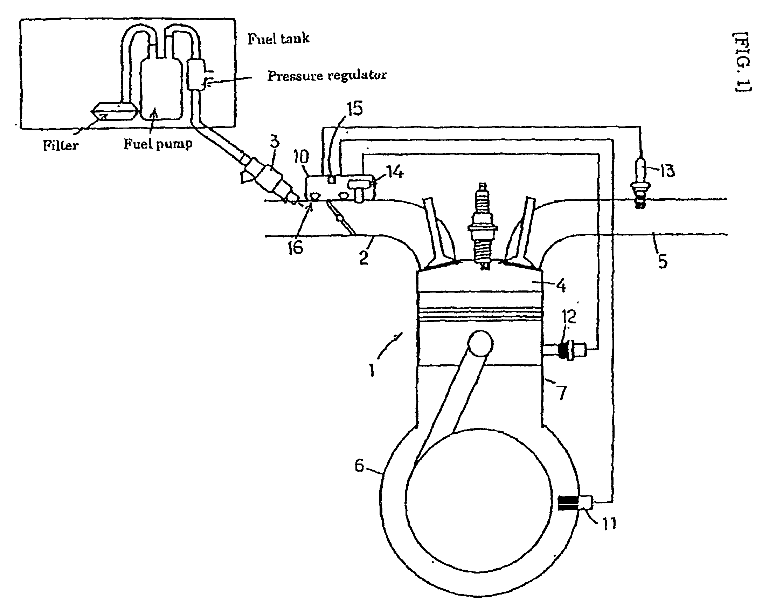

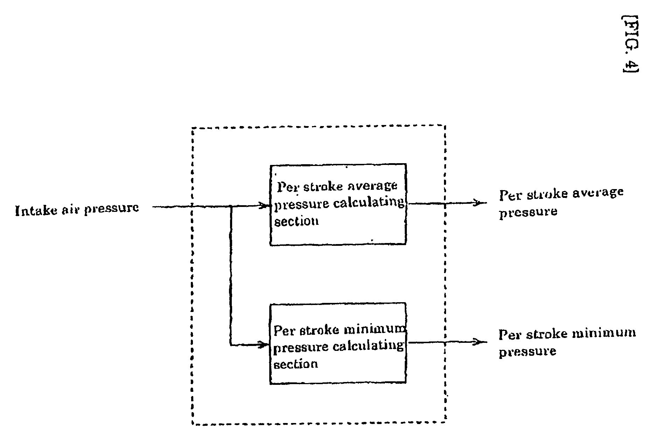

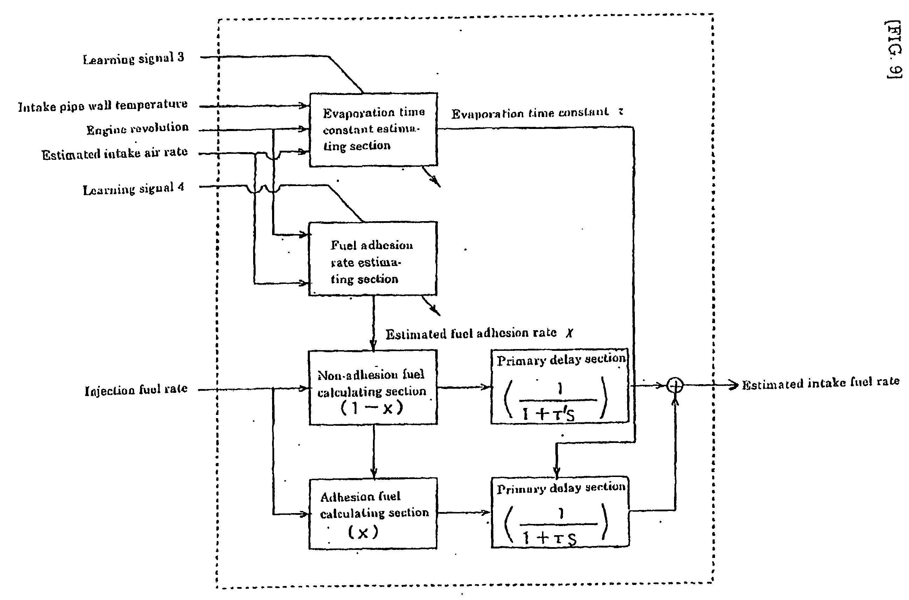

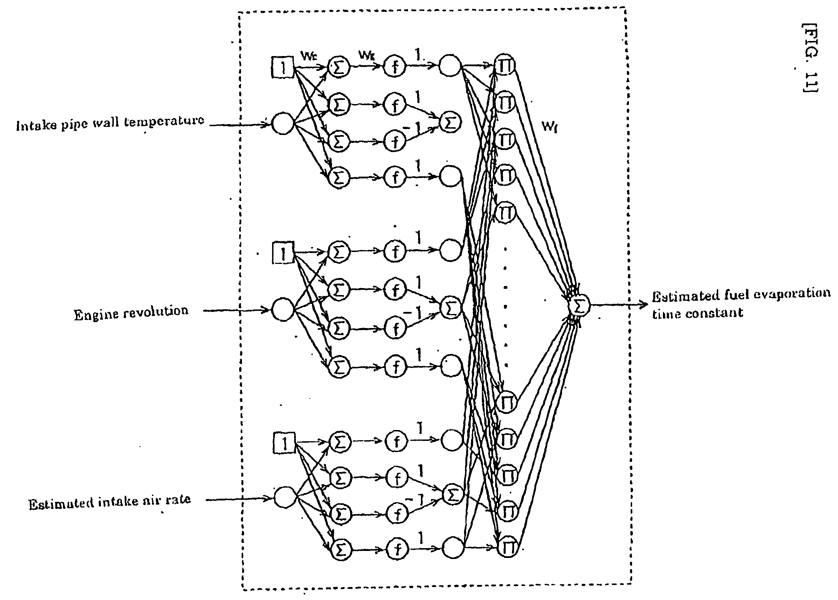

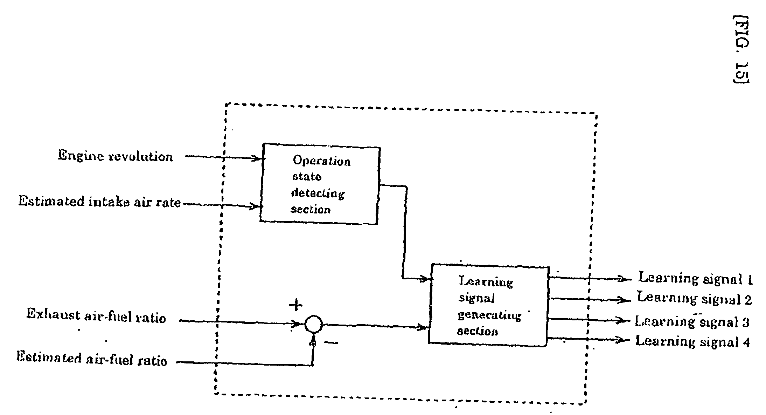

First, a first embodiment of an air-fuel control of an engine employing the data estimation method for the engine control of the invention will be described in reference to FIGs. 1 through 15.

FIG. 1 generally shows the relationship between an engine 1 and a control device 10 capable of implementing the air-fuel ratio control employing the data estimation method for controlling the engine according to the invention.

The engine 1 is of the four-cycle type in which mixture is introduced into the combustion chamber of a cylinder 4 through an air cleaner (not shown) and a fuel injection device 3 disposed at an intake pipe 2, and the exhaust gas after combustion is discharged to the atmosphere through an exhaust pipe 5

The control device 10 controls the air-fuel ratio in the exhaust gas by manipulating the rate of fuel injected from the fuel injection device 3.

The control device 10 is disposed at the intake pipe 2 as shown in FIG. 1 and constituted as follows: Data are detected with; a crank angle sensor 11 disposed at the crankcase 6, an engine temperature sensor 12 disposed at the cylinder block 7, an air-fuel ratio sensor 1S disposed at the intake pipe 2; an intake pipe vacuum sensor 14, an ambient temperature sensor 15, and an intake pipe wall temperature sensor 16 disposed integrally with (or separately from) the control device 10; and inputted to the control device 10. The control device 10 receives the input of those data to determine and output the amount of manipulation (namely injection signal) for the fuel injection device 3 and is constituted to carry out learning and evaluation of the internal models that constitute the device.

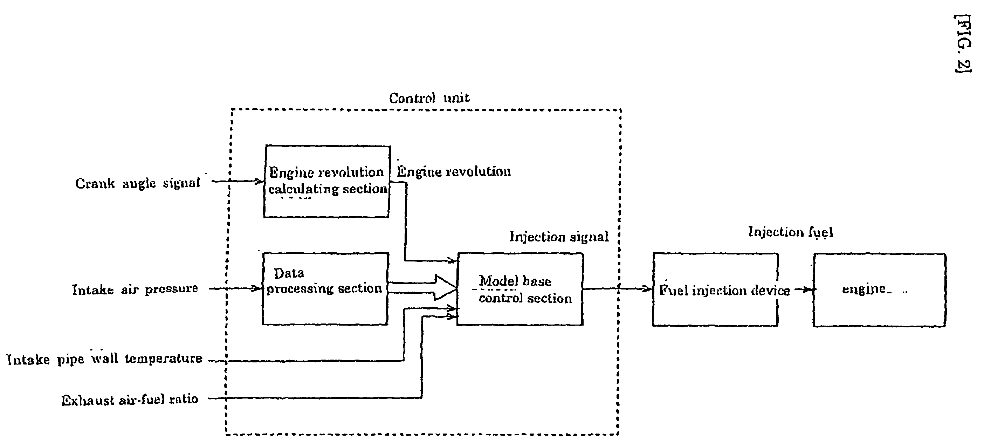

FIG. 2 is a general block diagram showing the constitution of the control device 10.

The control device 10 comprises;

an engine revolution calculating section for calculating the engine revolution based on the crank angle signal obtained from the crank angle sensor 11,

a data processing section for processing the intake air vacuum information taken from the intake pipe vacuum sensor 14 to produce the information usable in a obtained base control section which will be described later, and

the model base control section to which are inputted; data processed in the data processing section, the engine revolution, the intake pipe wall temperature information obtained from the intake pipe wall temperature sensor 16, and the exhaust air-fuel ratio obtained from the air-fuel ratio sensor 13: for determining the injection signals to be sent to the fuel injection device 3 based on those input data.

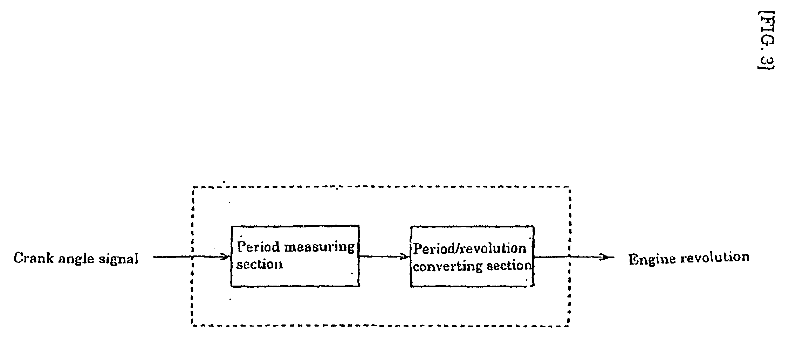

FIG. 3 is a general block diagram showing the constitution of the engine revolution calculating section constituted as shown in the figure to measure the period of the crank angle signals with a period measuring section and to convert the period into the engine revolution with a period-to-revolution conversion section.

FIG- 4 is a general block diagram showing the constitution of the data processing section constituted as shown in the figure to calculate the average pressure per stroke with the per-stroke average pressure calculating section using the intake air pressure data, to calculate the minimum pressure within one stroke with the per-stroke minimum pressure calculating section, and to output those data (the per-stroke average pressure and the per-stroke minimum pressure).

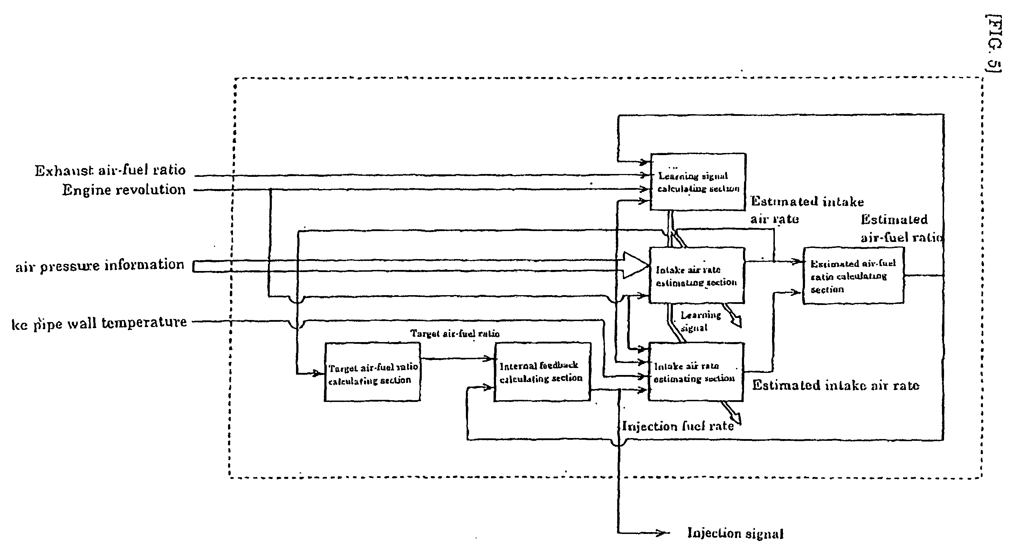

FIG. 5 is a general block diagram showing the constitution of the model base control section.

As shown in the figure, the model base control section comprises;

an intake air rate estimating section constituting an air system sequence model made by assuming the behavior of air in the intake pipe as a model,

an intake fuel rate estimating section constituting a fuel system sequence model made by assuming the behavior of fuel injected from the fuel injection device as a model, and

an estimated air-fuel ratio calculating section for calculating the estimated air-fuel ratio based on the estimated intake air rate and the estimated intake fuel rate respectively estimated with the intake air rate estimating section and the intake fuel rate estimating section.

The model base control section further comprises;

a target air-fuel ratio calculating section for calculating a target air-fuel ratio based on the estimated intake air rate, and

an internal feedback calculating section which calculates the injection fuel rate for the fuel injection device (namely injection signals to the fuel injection device) based on the target air-fuel ratio and the estimated air-fuel ratio, and outputs the result to the fuel injection device of the engine and to the intake fuel rate estimating section.

The model base control section further comprises a learning signal calculating section to which are inputted the estimated air-fuel ratio, estimated intake air rate, actual exhaust air-fuel ratio, and engine revolution; for calculating the learning data for the intake air rate estimating section and the intake fuel rate estimating section based on those input data.

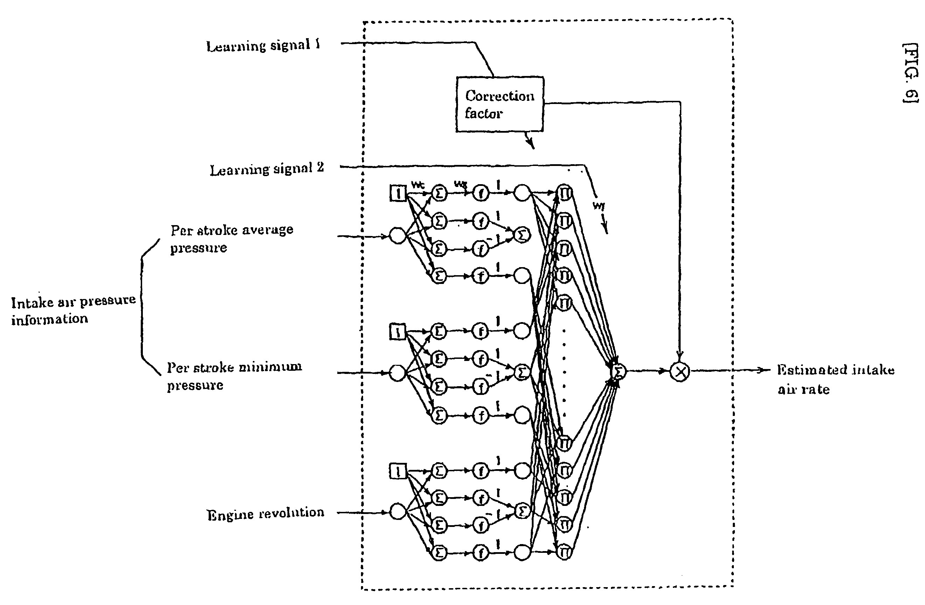

FIG. 6 is a general block diagram showing the internal constitution of the intake air rate estimating section.

As shown in the figure, the intake air rate estimating section comprises a fuzzy neural network which receives the input of the engine operation state data, e. g. average intake air pressure and the minimum intake air pressure per-stroke, and the engine revolution other than the intake air rate which is the subject of sensing, and outputs the estimated value of the intake air rate which is the subject of sensing.

This fuzzy neural network comprises six processing layers, with the first through fourth layers constituting an antecedent portion and the fifth and sixth layers constituting a consequent portion.

Pieces of input information are divided into the membership functions, each defined with the equation shown below and constituting the antecedent portion including the first through fourth layers, using the parameter wc representing the central position and the parameter wg representing the gradient of the sigmoid function as coupling factors.

$$f(x) = 1/1 + \exp(-wg(xi + wc))$$

The consequent portion is divided into fuzzy rules corresponding in number to the number of membership functions of the antecedent portion. The outputs of the fuzzy rules are respectively expressed with coupling weights wf. A sum of products of respective coupling weights wf and grades of the corresponding antecedent portion membership functions is calculated and the resultant value is outputted as an estimated value produced with the barycentric method of the fuzzy inference, namely as an estimated intake air rate.

The number and types of the input information for the fuzzy neural network constituting the above-described intake air rate estimating section, the coupling weights wc and wg representing the central position and gradient of the membership function, and the number of membership functions corresponding to respective input information data are optimized with a hereditary algorithm using those information data as genes, while taking the relationship with the consequent portion coupling weight wf into consideration.

During the execution of the control, the coupling weight wf is made learnable based on the learning signal 2 calculated in the learning signal calculating section, and a correction factor for the output (estimated intake air rate) of the fuzzy neural network is also made learnable based on the learning signal 1 calculated in the learning signal calculating section. The above-mentioned correction factor is used to correct the output of the fuzzy neural network according to changes in the environment as when running on an slope.

Here will be described the optimization process using the hereditary algorithm in which the number and types of input information to the fuzzy neural network constituting the intake air rate estimating section, and the values of the coupling weights wc and wg representing the central position and the gradient of the membership function are determined.

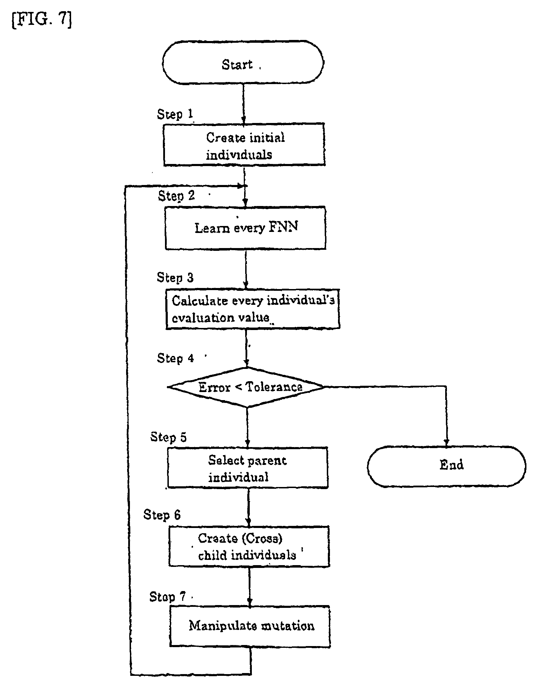

FIG. 7 is a flow chart of the optimization process of the fuzzy neural network using the hereditary algorithm.

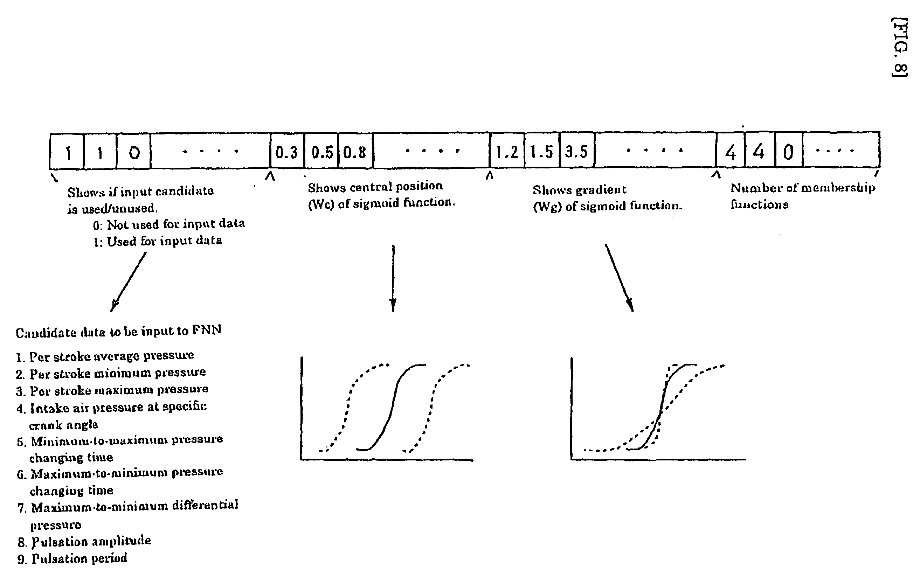

First, as shown in FIG. 8, the number and types of input information in the fuzzy neural network constituting the intake air rate estimating section, the coupling weights wc and wg representing the central position and the gradient of each membership function, and the number of the membership functions are coded as genes to produce a first generation consisting of a plural number (100 for example) of individuals (step 1).

Here, a plural number of input candidate data for use as the input information to the fuzzy neural network are prepared in advance. The data denoting whether the input candidate data is used or unused (in this embodiment, "0" denotes "unused" and "1" denotes "used") is used as a gene. As the input candidate data for estimating the intake air rate, the following can be considered for example; the average intake air pressure per stroke, minimum intake air pressure per stroke, maximum intake air pressure per stroke, intake air pressure at a specific crank angle, period of time in which the intake air pressure changes from the minimum to the maximum, period of time in which the intake air pressure changes from the maximum to the minimum, differential pressure between the minimum and maximum pressures, intake air pulsation amplitude, period (interval) of the intake air pulsation and so on. Since these data are checked for their suitability as the input information with the optimization process, the data may be of any type as long as they can be detected or processed.

The information on the number, to be coded as a gene, of membership functions can be prepared so as to correspond to the input information.

Next, the input information and the coupling factor of the fuzzy neural network are fixed with one of the individuals produced in the step 1, the estimated value of the intake air rate is determined with the fuzzy neural network, the actual intake air rate is detected with a sensor such as an air flow meter, and learning of the consequent portion coupling weight wf is carried out for a specified number of times with the back propagation (BP) method so as to reduce the difference between the estimated and the actually measured values, namely to improve the estimation accuracy (step 2).

After applying the process of the step 2 to all the individuals, an evaluation value is calculated according to the error between the estimated and measured values for each of the individuals (step 3).

After calculating the evaluation values for all the individuals, determination is made whether the error of the individual of the highest evaluation (elite individual) is smaller than a tolerance value (step 4). If the error is smaller than the tolerance value, the fuzzy neural network is determined as being optimized, and the optimization process is finished. The input information and the coupling factor of the fuzzy neural network are fixed with the genes constituting the elite individual.

In the case the error is greater than the tolerance value as determined in the step 4, the fuzzy neural network is determined as not being optimized, and two parent individuals are selected from the first generation individuals so as to produce the next generation (step 5). The selection of the parent individuals may be carried out by the roulette choice in which an individual having a higher evaluation value has a higher probability of being selected as the parent individual.

When the parent individuals are selected, the selected parent individuals are made to cross each other to reproduce a plural number of child individuals as the second generation (step 6). Incidentally, the mutual crossing of the parent individuals may be carried out by methods such as one-point crossing, two-point crossing, normal distribution crossing, and so on. And when the number of the first generation individuals is 100 for example, it may be arranged that the number of the child individuals produced by the crossing of the parent individuals is 99 to which the elite individual of the first generation is added to produce 100 second generation individuals. Leaving the previous generation individual intact to the next generation as described above provides an effect of reducing the time required for the optimization.

In still another step, mutation is caused to the genes by changing the values of the genes at random at a certain probability for the plural number of child individuals produced (step 7).

After producing the second generation by the above-described process, the optimization process from the step 2 is repeated again.

The above-described optimization process is repeated until the error between the estimated value (output from the fuzzy neural network) and the actually measured value of the intake air rate becomes smaller than the tolerance value. As a result, the input information and coupling factor most suited for estimating the intake air rate are automatically determined.

Here, description returns to the constitution of the processing sections of the model base control section.

FIG, 9 shows the internal constitution of the intake fuel rate estimating section.

In the intake fuel rate estimating section, the behavior of the fuel injected from the fuel injection device is represented with a model consisting of the rate of the injected fuel that does not directly enter the inside of the cylinder but adheres to the intake pipe wall, the intake valve, etc. (hereinafter referred to as the fuel adhesion rate x) and the rate at which the fuel that has adhered to the intake pipe wall, the intake valve, etc. evaporates (hereinafter referred to as the evaporation time constant $\tau$). With the above-described arrangement, the intake fuel rate estimating section estimates the fuel entering the cylinder based on the fuel injection rate inputted from the internal feedback calculating section, the fuel adhesion rate, and the evaporation time constant. To achieve the above-described function, the intake fuel rate estimating section comprises a fuel adhesion rate estimating section, an evaporation time constant estimating section, a non-adhesion fuel calculating section, an adhesion fuel calculating section, and an evaporation fuel rate calculating section.

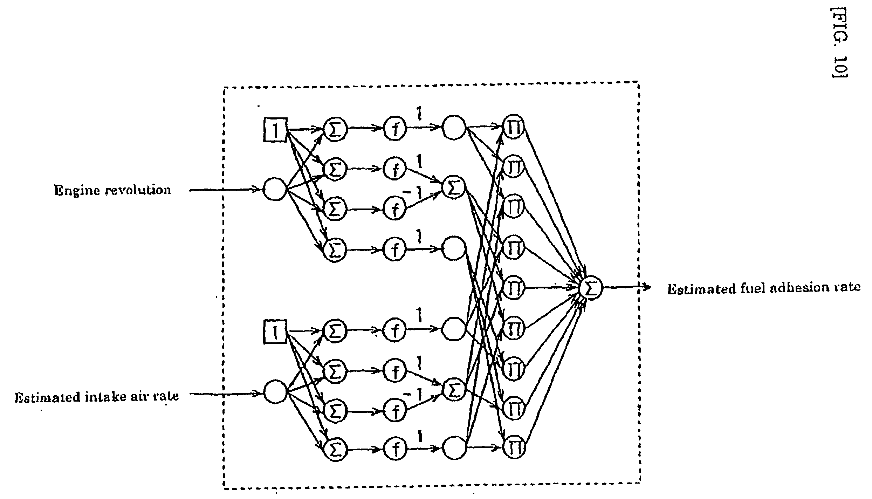

The fuel adhesion rate estimating section as shown in FIG. 10 comprises a fuzzy neural network which receives the input data of the engine operation state (the engine revolution and the estimated intake air rate) other than the fuel adhesion rate or the subject of sensing, and outputs the subject of sensing or the estimated value of the fuel adhesion rate.

The evaporation time constant estimating section as shown in FIG, 11 comprises a neural network which receives the input data of the engine operation state (the intake pipe wall temperature, the engine revolution, and the estimated intake air rate) other than the subject of sensing or the evaporation time constant and, out puts the estimated value of the evaporation time constant or the subject of sensing.

The fuzzy neural network constituting the fuel adhesion rate estimating section and the evaporation time constant estimating section, like the above-described fuzzy neural network constituting the intake air rate estimating section, comprises six processing layers, with the first through fourth layers constituting the antecedent portion using as coupling factors the parameter wc representing the central position and the parameter wg representing the gradient of the sigmoid function, and with the fifth and sixth layers constituting the consequent portion using as coupling weights the outputs wf of the nine fuzzy rules corresponding to the number of the membership functions of the antecedent portion. With the above-described constitution, a sum of products of the grades of the membership functions and the corresponding coupling weights wf is determined, and the result is outputted as the value estimated with the barycentric method of fuzzy inference, namely the estimated fuel adhesion rate and the estimated fuel evaporation time constant.

The number and types of the input information and the values of the coupling weights wc and wg representing the central position and the gradient of the membership function in the fuzzy neural network can be determined by the optimization process according to the hereditary algorithm while taking into consideration the relationship with the consequent portion coupling weight wf. The coupling weight wf constituting the consequent portion is constituted to be learnable with the learning signals 3 and 4 obtained with the learning signal calculating section during the implementation of the control.

The non-adhesion fuel calculating section calculates the rate of fuel entering the combustion chamber of the cylinder directly from the fuel injection device according to the estimated fuel adhesion rate x obtained from the fuel adhesion rate estimating section and according to the fuel injection rate obtained from the internal feedback calculating section.

The adhesion fuel calculating section calculates the rate of fuel injected from the fuel injection device and adhering to the intake pipe wall, the intake valve, etc. according to the estimated fuel adhesion rate x obtained from the fuel adhesion rate estimating section and according to the fuel injection rate obtained from the internal feedback operation section.

The first evaporation fuel rate calculating section calculates the rate of fuel evaporating from the fuel adhering to the intake pipe wall, the intake valve, etc. based on the evaporation time constant $\tau$ estimated with the evaporation time constant estimating section and based on the adhesion fuel rate obtained with the adhesion fuel rate calculating section.

The second evaporation fuel rate calculating section calculates the rate of the fuel from the fuel injection device evaporating before directly entering, the combustion chamber of the cylinder based on the predetermined evaporation time constant $\tau$. Incidentally, since the time constant $\tau'$ for the fuel directly entering the cylinder is very small, and its influence is very small, here it is assumed to be an appropriate constant.

The intake fuel rate estimating section calculates and outputs the estimated value of the intake fuel rate by the processes in the above-described processing sections.

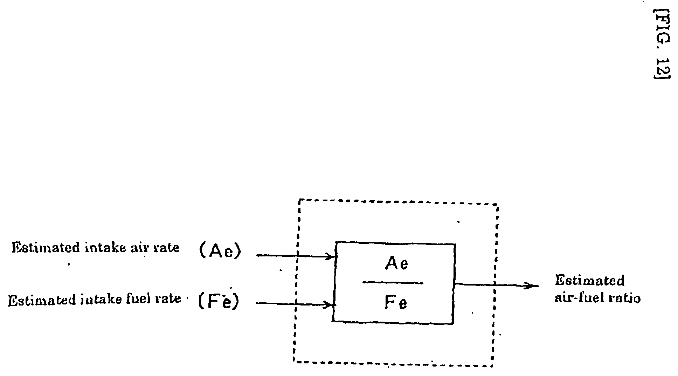

The estimated air-fuel ratio calculating section as shown in FIG. 12 calculates the estimated air-fuel ratio Ae/Fe based on the estimated intake air rate Ae and the estimated intake fuel rate Fe respectively obtained from the intake air rate calculating section and the intake fuel rate calculating section constituted as described above.

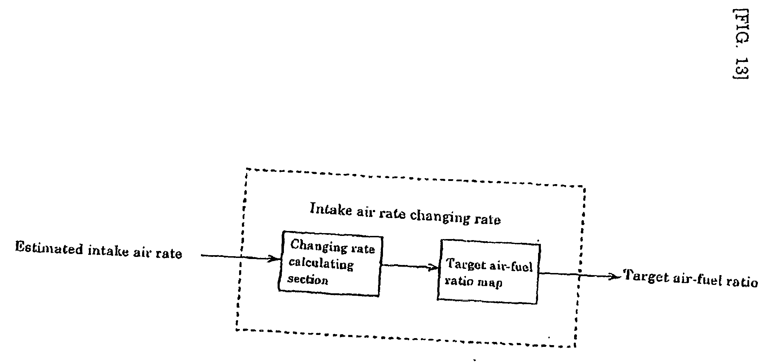

FIG. 13 is a general block diagram showing the constitution of the target air-fuel ratio calculating section.

The target air-fuel ratio calculating section comprises a changing rate calculating section for calculating the rate of change in the estimated intake air rate and a map of the target air-fuel ratio versus the changing rate, receives input of the estimated intake air rate obtained from the intake air rate estimating section, and outputs the target air-fuel ratio commensurate with the estimated intake air rate.

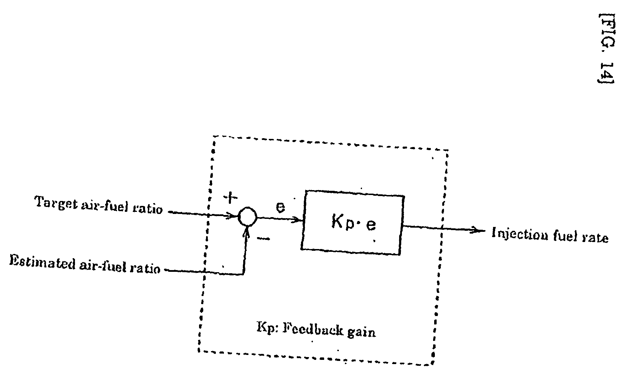

FIG. 14 is a general block diagram showing the constitution of the internal feedback operation section. As shown in the figure, the internal feedback operation section determines the fuel injection rate so that the error of the estimated fuel-air ratio obtained from the estimated air-fuel ratio calculating section relative to the target air-fuel ratio obtained from the target air-fuel ratio calculating section becomes smaller, and outputs the determined value to the fuel injection device and to the intake fuel estimating section. In FIG. 14, the symbol Kp denotes the feedback gain.

FIG, 15 is a general block diagram showing the constitution of the learning signal calculating section.

As shown in the figure, the learning signal calculating section comprises an operation state detecting section and a learning signal generating section. The operation state detecting section receives the input data of engine revolution and estimated intake air rate and, based on those data, determines the current engine operation state (for example a transient state or a stationary state).

The learning signal generating section receives the input data of the error of the estimated air-fuel ratio relative to the actually measured exhaust air-fuel ratio, and determines the learning signals 1 through 4 so that the error becomes smaller.

Here, since the learning signals 1 and 2 are for the intake air rate calculating section, they are calculated from the information obtained when the engine operation state is stationary. Since the learning signals 3 and 4 are for the intake fuel rate calculating section, they are calculated from the information obtained when the engine operation state is transient.

Furthermore, since the learning signal 1 is for the correction factor for correcting the output of the fuzzy neural network according to changes in the environment such as during the slope running as described before, it is issued in succession according to changes in the environment during the stationary state with a large gain. However, since the learning signal 2 is for the consequent portion coupling factor wf of the fuzzy neural network, whether it should be issued or not is determined according to the tendency of the output value of the learning signal 1 so as to avoid response to the error due to changes in the environment. Actually, the learning signal 1 is continuously on the increase during the upward slope running while it is on the decrease during the downward slope running. In such cases, the environment is deemed to be changing, and the learning with the learning signal 2 is not carried out.

When there is no change in the environment, learning is carried out with both of the learning signals 1 and 2. However, it is arranged that the gain is larger for the learning using the learning signal 1 than for the learning of the fuzzy neural network (FNN) using the learning signal 2.

When the output of the learning signal 2 is determined according to the tendency of the output of the learning signal 1 as described above, the consequent portion coupling factor of the fuzzy neural network does not change in response to the environmental changes. As a result, unnecessary learning is not carried out and therefore, the output of the fuzzy neural network becomes stabilized.

The first embodiment described above is constituted that the input information and the antecedent portion coupling factors of the fuzzy neural networks of respective estimating sections of the model base control section are optimized in advance with the hereditary algorithm while taking into consideration the relationship with the consequent portion coupling weight wf and that only the learning of the consequent portion coupling weight wf is carried out during the execution of the control. However, the optimization of the fuzzy neural network is not limited to the first embodiment but may be constituted to be carried out during the execution of the control.

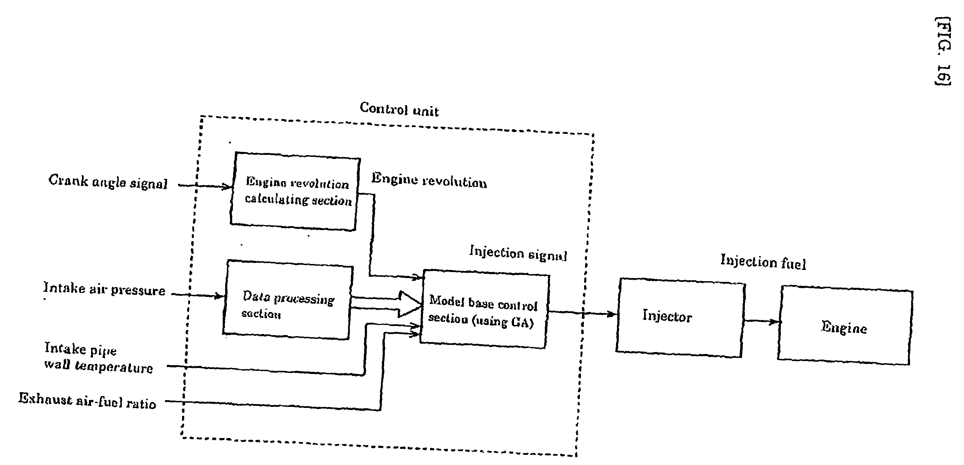

FIG. 16 is a general block diagram showing the constitution of the control device as a second embodiment constituted to carry out the optimization process of the fuzzy neural network during execution of the control under the same conditions as those of the first embodiment. In the following, only the processing sections that are different from those in the first embodiment are explained, and explanation of other processing sections is omitted.

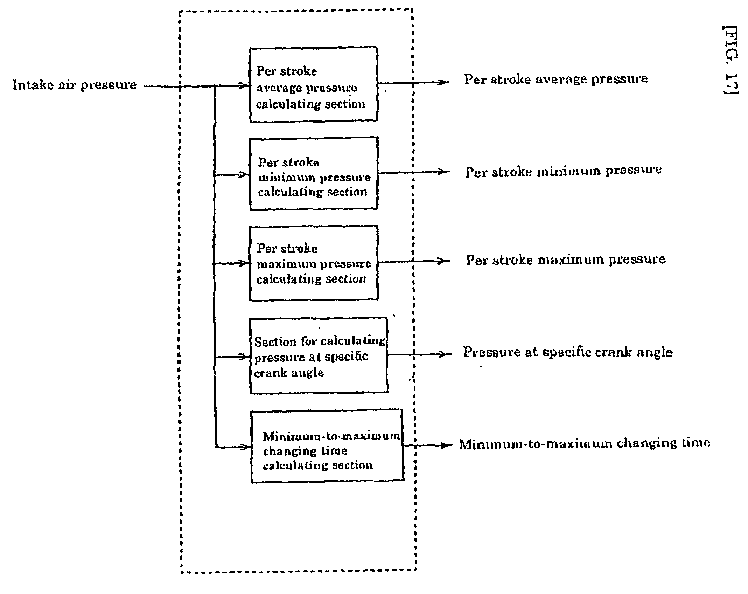

The model base control section is constituted that the optimization process of the fuzzy neural network constituting its intake air rate estimating section can be carried out during the implementation of the control. The data processing section as shown in FIG. 17 processes the intake air pressure data to produce input candidate data for the fuzzy neural network constituting the intake air rate estimating section in the model base control section.

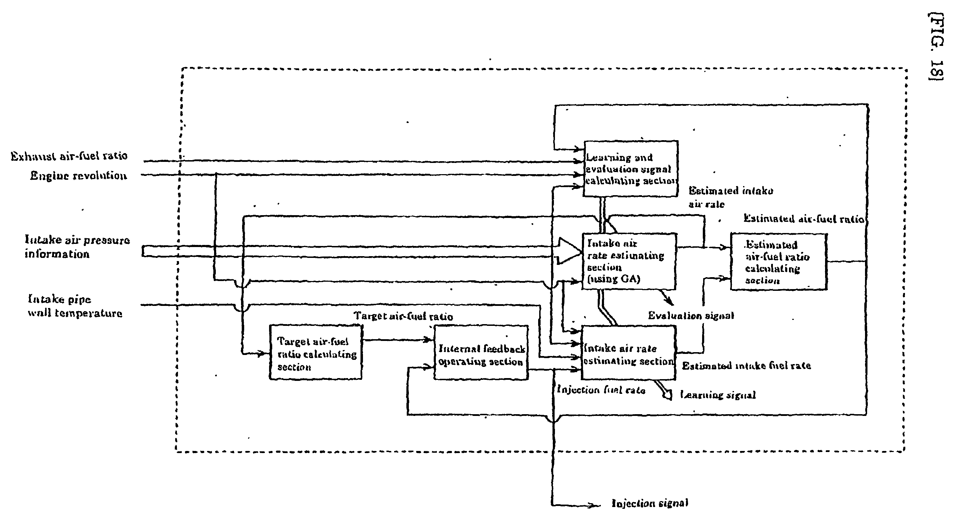

FIG. 18 is a general block diagram showing the constitution of the model base control section. As described before, the intake air rate calculating section comprises a fuzzy neural network that uses the input information data other than the sensing subject and outputs the sensing subject or the intake air rate, and is constituted to carry out the optimization process of the fuzzy neural network during the implementation of the control. The learning and evaluation signal calculating section calculates and outputs, in addition to the learning signals for the fuzzy neural network of the intake fuel rate calculating section and the intake air rate calculating section, evaluation signals to be used for the optimization process in the intake air rate calculating section.

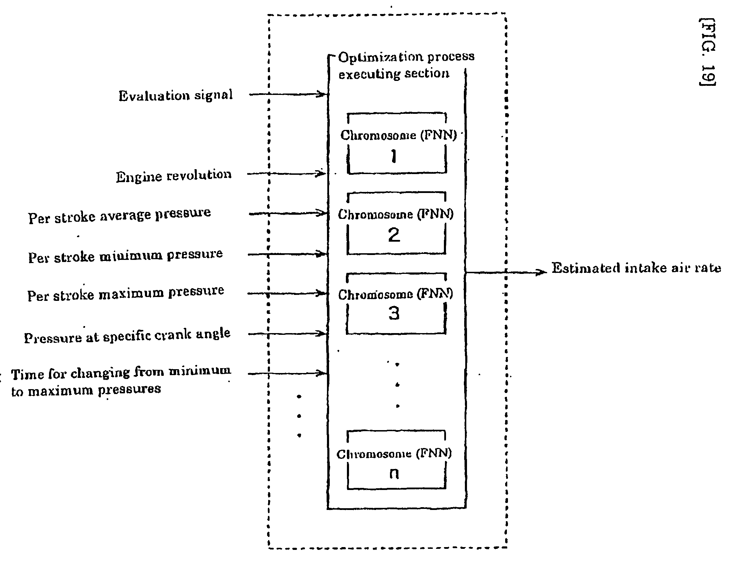

FIG. 19 is a general block diagram showing the constitution of the intake air rate calculating section. As shown in the figure, the intake air rate calculating section comprises an optimization process executing section which receives the input of various input candidate data including the data processed in the data processing section and generates, by coding the input data, a plural number of individuals (chromosomes) using the data denoting whether the input candidate data are used or unused (in this embodiment, "0" stands for "unused" and "1" for "used") and the antecedent portion coupling weights wc and wg as genes. The fuzzy neural network is optimized while selecting from among the individuals according to the evaluation signals obtained from the learning and evaluation signal calculating section. Since the optimization process using the hereditary algorithm is basically the same as that of the first embodiment, explanation thereof is omitted.

The optimization process in the intake air rate estimating section is started at appropriate time intervals, or when a specified condition is met, or by a direct instruction by a user. When the optimization process is not being carried out, a learning process can be carried out with the learning signal obtained from the learning and evaluation signal calculating section, like the intake air rate estimating section explained with the first embodiment.

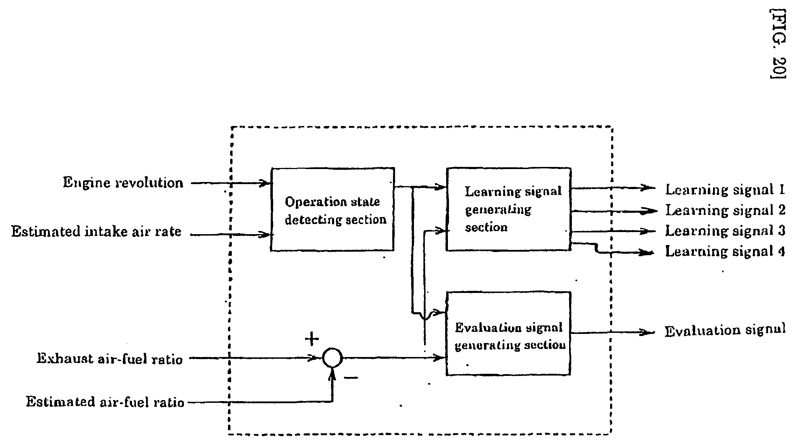

FIG. 20 is a general block diagram showing the constitution of the learning and evaluation signal calculating section.

The learning and evaluation signal calculating section, like that of the first embodiment, when the optimization process is not carried out in the intake air rate estimating section, calculates and outputs the learning signals 1 and 2 for the intake air rate estimating section or the learning signals 3 and 4 for the intake fuel rate estimating section according to the operation state of the engine.

When the optimization process is being carried out in the intake air rate estimating section, evaluation signals of respective individuals, in addition to the above-described learning signals 1 through 4, are outputted from the evaluation signal generating section according to the error between the estimated and measured values of the air-fuel ratio.

In the intake air rate estimating section, during the optimization process, learning of the consequent portion coupling weight wf is carried out when the fuzzy neural network is being operated using respective individuals according to the learning signal 2 outputted from the learning and evaluation signal calculating section, and determines the evaluations of respective individuals according to the evaluation signals.

In the first and second embodiments described so far, ending of the optimization process is determined according to whether the output error of the fuzzy neural network is smaller than the tolerance value. However, the condition of the ending determination is not limited to that in the above embodiments. It may also be arranged such that the process is repeated for a predetermined number of generations, or that the evolution is finished when the decreasing tendency of the output error is deemed to be converging.

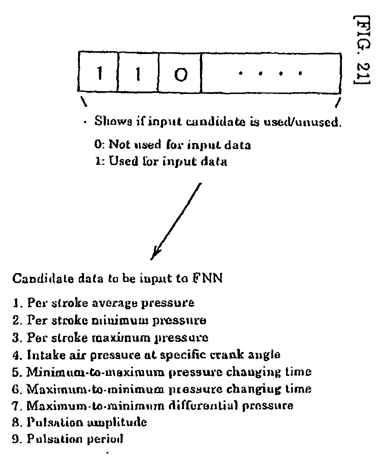

In the embodiments described above, both of the input information and the membership function of the fuzzy neural network are optimized using the hereditary algorithm. However, this invention is not limited to the above embodiments and may also be embodied otherwise. As shown in FIG. 21, only the types and the number of the input information as genes are coded and optimized by the hereditary algorithm. The membership function may be optimized, as proposed by the applicant's Japanese patent application No. Hei-9-91115, by adding fuzzy rules using the changing tendency of the coupling factor and the decreasing tendency of the error of the fuzzy neural network in the learning process as decision criteria. At the same time, using the lineality of the consequent portion coupling weights of at least three membership functions in the same input information as the decision criteria, when the coupling factors have lineality, at least one of the membership functions corresponding to the consequent portion weights is deleted.

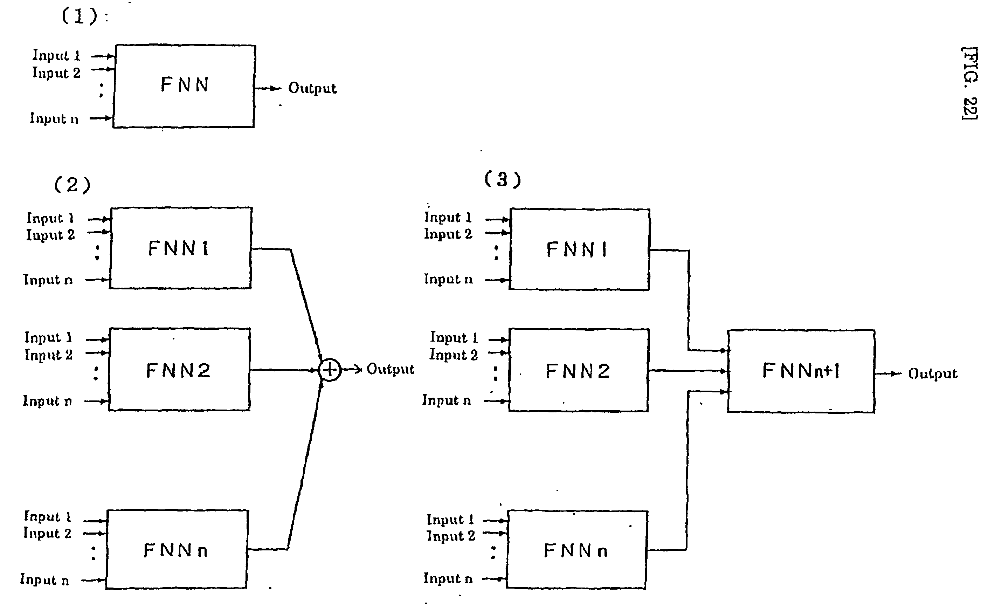

Furthermore in the above- described embodiments, while the fuzzy neural network of each estimating section is constituted with the basic form fuzzy neural network, as shown in FIG. 22(1), the constitution of the fuzzy neural network is not limited to such an embodiment, but may be constituted otherwise as shown in FIGs. 22(2) or 22(3) in which outputs of a plural number of fuzzy neural networks are summed up and outputted, or outputs of a plural number of fuzzy neural networks are further used as input data to another fuzzy neural network which in turn outputs data. Even if the fuzzy neural network is constituted in the complicated manner as described above, effects are still provided that the selection of input information and the determination of respective coupling factors are made in a simple manner.

Furthermore, while the above embodiments are described as examples in which the intake air rate, fuel adhesion rate, or evaporation time constant as control parameters are estimated using the data estimation method for the engine control of this invention from other information, the information that can be estimated with the data estimation method for the engine control of this invention is not limited to that used in the above embodiments. Rather, it is a matter of course that any data, may be used as long as the data are about the state of the engine.

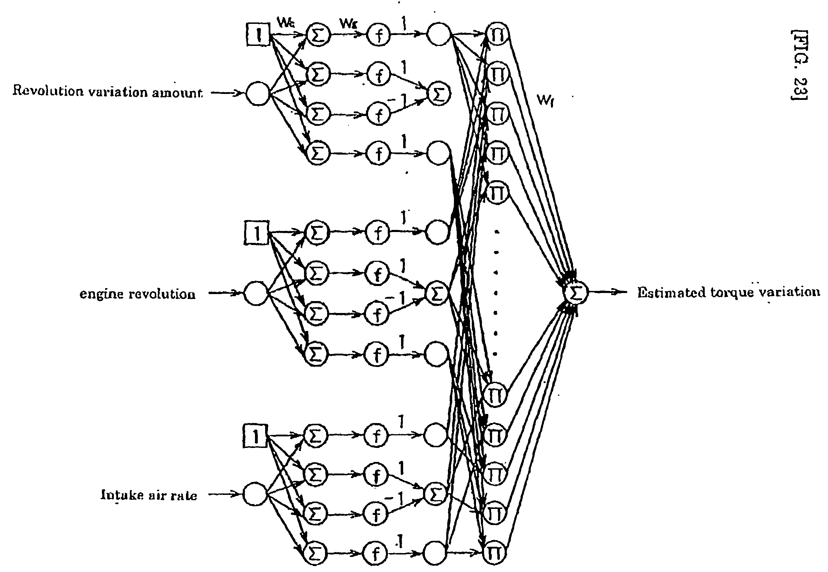

For example, the amount of variation in torque may be estimated with 9 fuzzy neural network using at least one of the amount of variation in revolution, the engine revolution, and time sequential data of the intake air rate and the combustion chamber pressure as the input information. (See in FIG. 23. The drawing shows an example of a fuzzy neural network for estimating the amount of torque variation)

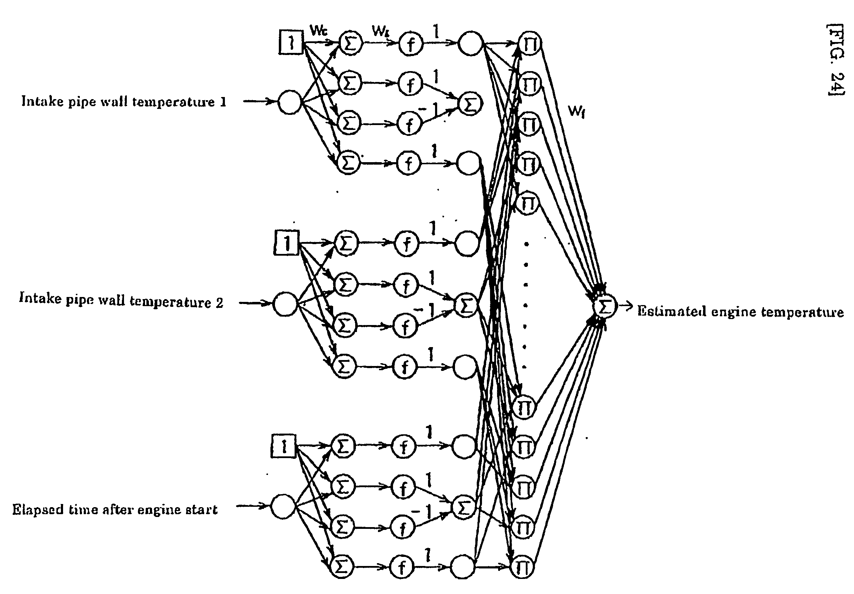

Furthermore, the combustion chamber temperature may be estimated with a fuzzy neural network using at least one of the intake pipe wall temperature, intake pipe ambient temperature (atmospheric temperature), and the time elapsed after starting the engine as the input information, (See FIG. 24. The drawing shows an example of a fuzzy neural network for estimating the combustion chamber temperature of the engine).

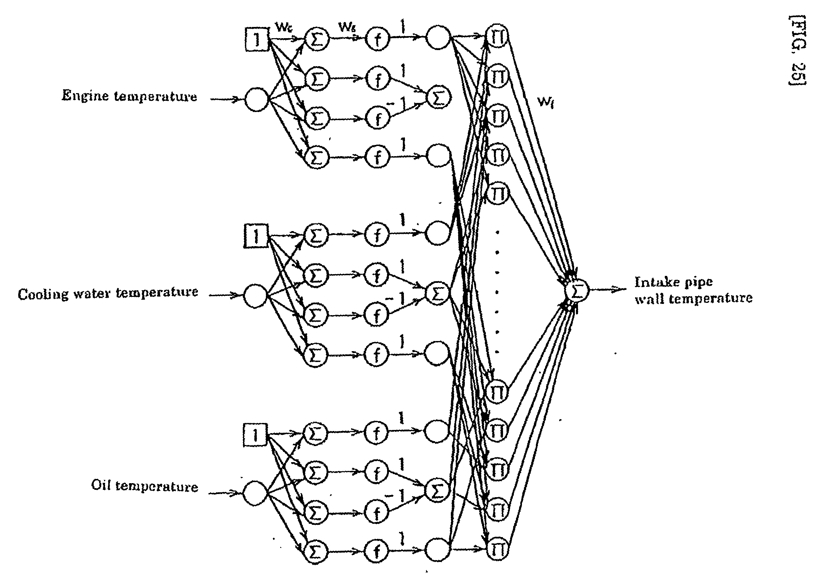

Furthermore, the intake pipe wall temperature may be estimated with a fuzzy neural network using at least one of the cooling water temperature, oil temperature, and the engine (cylinder block) temperature as the input information. (See FIG. 25. The drawing shows an example of a fuzzy neural network for estimating the intake pipe wall temperature).

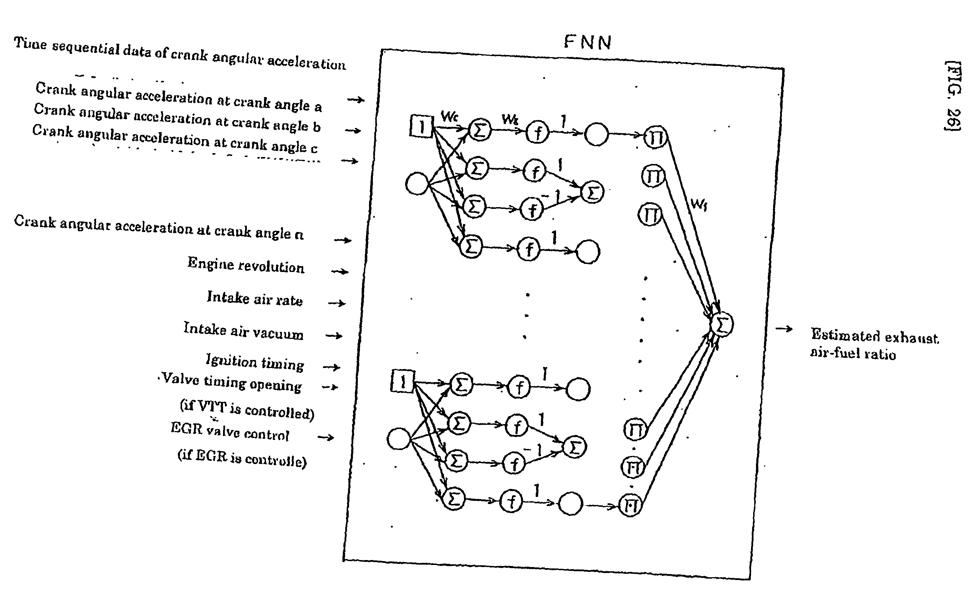

Furthermore, the exhaust air-fuel ratio may be estimated with a fuzzy neural network using input information including at least one of; time sequential data of crank angular acceleration, engine revolution, intake air rate, intake air vacuum, ignition timing, opening and closing timings of intake and exhaust valves when a variable valve timing, device is used, and EGR valve opening when EGR control is used. (See FIG. 26. The drawing shows an example of fuzzy neural network for estimating the exhaust air-fuel ratio).

Furthermore, the exhaust air-fuel ratio may be estimated with a fuzzy neural network using input information including at least one of, exhaust temperature, atmospheric temperature, engine revolution, intake air rate, intake air vacuum, ignition timing, and throttle valve opening. (See FIG. 27. The drawing shows an example of fuzzy neural network for estimating the exhaust air-fuel ratio).

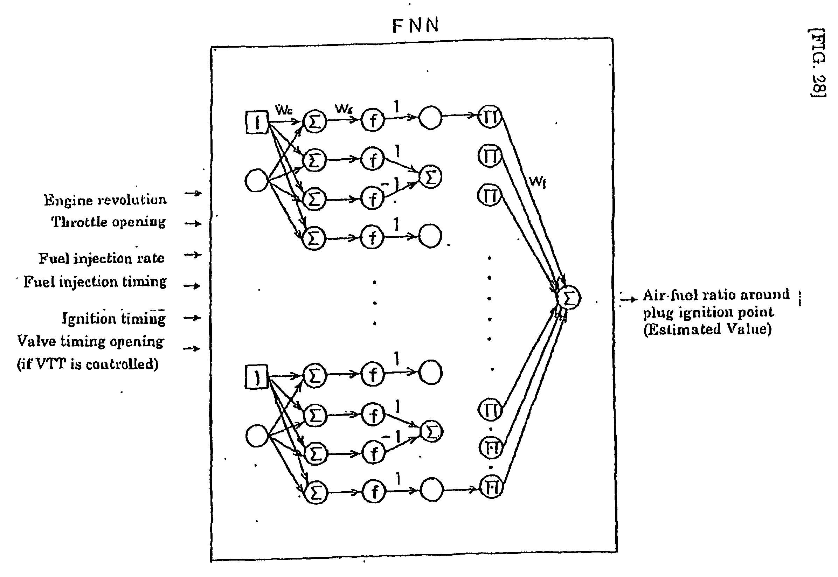

Furthermore, the air-fuel ratio around the plug ignition point in an in-cylinder injection type of engine may be estimated with a fuzzy neural network using input information including at least one of, engine revolution, throttle opening, fuel injection rate, fuel injection timing, ignition timing, and opening and closing timings of intake and exhaust valves when a variable valve timing device is used, (See FIG. 28. The drawing shows an example of fuzzy neural network for estimating the air-fuel ratio around the plug ignition point).

Furthermore, the content of NOx in the exhaust gas in the exhaust catalyst system may be estimated with a fuzzy neural network using input information including at least one of, engine revolution, throttle opening, exhaust temperature at the inlet of the catalyst system, exhaust temperature at the outlet of the catalyst system, traveled distance, and exhaust air-fuel ratio. (See FIG. 29. The drawing shows an example of fuzzy neural network for estimating the content of NOx in the exhaust gas in the exhaust catalyst system).

Furthermore, the user's sensory evaluation value of the engine state may be estimated with a fuzzy neural network using input information including at least one of pulses, blood pressures, breathing intervals, and brain waves of the user. (See FIG. 30. The drawing shows an example of fuzzy neural network for estimating the user's sensory evaluation value).

As described above, with the data estimation method of this invention for controlling an engine using data on the state of the engine as control parameters, the data on the state of the engine as control parameters are estimated with a fuzzy neural network using a plural pieces of input information that are not used as the control parameters. Therefore, data other than those used as the control parameters may be estimated as those used as the control parameters by using them as the input information to the fuzzy neural network, using the output as the control parameters, and teaching to optimize the coupling factors of the fuzzy neural network and the number of the membership functions. As a result, an effect is provided that data that have been difficult to use as the control parameters, or the data that have required expensive sensors to detect in the past may be simply detected using inexpensive sensors. Another effect is that since input information may be shared for more than one parameters, it is not always necessary to provide a sensor for every parameter.

With the estimation method according to a further embodiment of the invention, another effect is provided that the intake air rate may be estimated using a small-sized, inexpensive vacuum sensor instead of using an air flow meter or a heat wire anemometer which cannot be used on board an outboard or the like because of its high price, large size, and vulnerability to salt damage.

With the estimation method according to other embodiments of the invention, another effect is that the rate of fuel injected from the fuel injection device and adhering to the intake pipe wall, etc. in the intake pipe injection type of engine and the rate of fuel evaporating from the fuel adhering to the intake pipe wall, etc. that have been difficult to detect heretofore may be simply estimated. As a result, a sequential model of the engine may be simply constituted in the control device.

With the estimation method according to another embodiment of the invention, another effect is that the variation in torque that has been calculate from the variation in the engine revolution which has a non-linear relationship with the torque variation may be estimated with a better accuracy.

Further effect with the estimation method according to a still further embodiment of the invention is that the combustion chamber temperature for which no sensor has existed that is so small, inexpensive, and durable as to be mounted on each engine may be estimated with a better accuracy. Since the estimated value may be used as the control parameter, a fine control of an engine becomes possible such as controlling the fuel injection rate according to the combustion temperature.

Further effect with the estimation method according to a further embodiment of the invention is that the intake pipe wall temperature, for which the location to be measured changes according to the state of the engine operation, may be estimated with a good accuracy corresponding to the engine operation state from moment to moment.

Further effect with the estimation method according to still further embodiments of the invention is that the exhaust air-fuel ratio may be estimated using an existing, inexpensive sensor instead of an expensive air-fuel ratio sensor.

Further effect with the estimation method according to another embodiment if the invention is that the air-fuel ratio around the plug ignition point in an in-cylinder injection type of engine that has been so far impossible to measure may be estimated and the fuel injection rate into the cylinder may be controlled more accurately.

Further effect with the estimation method according to a further embodiment of the invention is that the amount of NOx content in the exhaust in the exhaust catalyst system that has been impossible to measure may be estimated and the engine may be controlled to improve combustion efficiency.

Further effect with the estimation method according to a still further embodiment of the invention is that the sensory evaluation values of the user that have been impossible to measure with sensors or the like may be estimated according to information collected with existing sensors for collecting physiological data such as the user's pulses, heartbeats, blood pressures, breathing intervals, and brain waves. Specifically for example, in the case the air-fuel ratio is controlled using an oxygen sensor, the ease of driving may be prevented from becoming poor by controlling an $O_2$ feedback gain according to the sensory evaluation value so that hunting of air-fuel ratio caused by the $O_2$ feedback is not transmitted to the user and a jerky feeling to the user is prevented.

Further effect with the estimation method according to another embodiment of the invention is that since the input data to be actually used may be optimized using a plural number of input candidate data, the selection of the input data is not dependent on the user's experience or knowledge and therefore, more appropriate input data may be obtained, and the time and trouble for selecting the input data may be saved.

**Claims**

1. A method for automatically optimizing the number and types of input information for a fuzzy neural network estimating an engine control parameter, comprising the steps of:

   generating a first generation of a plurality of individuals by coding the input information input to the fuzzy neural network (step 1),

   performing a learning operation of the fuzzy neural network for reducing an estimation error between the estimated parameter and the actual measured parameter value for each individual (step 2),

   calculating an evaluation value for each individual based on an estimation error for each individual (step 3),

   determining whether an estimation error of the individual having the highest evaluation value is smaller than a tolerance value (step 4),

if it has been determined that the estimation error is smaller than the tolerance value, the input information is fixed based on the individual having the highest evaluation value,

if it has been determined that the estimation error is larger than the tolerance value, two parent individuals are selected from the current generation for producing a plurality of individuals of a next generation (step 5) by crossing the parent individuals (step 6), the produced individuals are changed at random (step 7) and the optimization steps (steps 2-7) are repeated until the estimation error becomes smaller than the tolerance value.

2. A method according to claim 1, wherein said method further determines a coupling weight (wf) of the fuzzy neural network to estimated during the learning step (step 2), wherein said coupling weight (wf) being fixed together with the fixing of the input information.

3. A method according to claim 1 or 2, further comprising the step of preparing a plural number of input candidate data for the fuzzy neural network in advance, wherein each individual is formed by a plurality of genes and each gene indicating whether or not an input candidate data is used.

4. A method according to any of claims 1 to 3, wherein said learning step (steps 2 and 3) is carried out a specified number of times.

5. A method according to any of claims 1 to 4, wherein said learning step (steps 2 and 3) performs a back propagation.

6. A method according to any of claims 1 to 5, wherein the selection of the parent individuals (step 5) is carried out in form of a roulette choice.

7. A method according to any of claims 1 to 6, wherein the crossing of parent individuals (step 6) is carried out as one-point crossing, two-point crossing, or normal distribution crossing.

8. A method according to any of claims 1 to 7, wherein the step of producing next generation individuals comprises the step of adding the individual having the highest evaluation value to the individuals produced for the next generation.

9. A method according to any of claims 1 to 8, wherein the step of changing the individuals at random (step 7) causes changes at a certain probability.

10. A method according to any of claims 1 to 9, wherein the estimated parameter is the intake air rate, and the input information includes a plural number of data on at least the intake air vacuum of the engine.

11. A method according to any of claims 1 to 10, wherein the estimated parameter is the fuel adhesion rate in an intake pipe injection type of engine, and the input information includes at least one of the engine revolution, intake air rate, and intake air vacuum.

12. A method according to any of claims 1 to 11, wherein the estimated parameter is the evaporation time constant in an intake pipe injection type of engine, and the input information includes at least one of the intake pipe wall temperature, engine revolution, intake air rate, and intake air vacuum.

13. A method according to any of claims 1 to 12, wherein the estimated parameter is the amount of variation in torque, and the input information includes at least one of the variation in engine revolution, engine revolution, intake air rate, and time sequential data of the combustion chamber pressure.

14. A method according to any of claims 1 to 13, wherein the estimated parameter is the combustion chamber temperature, and the input information includes at least one of the intake pipe wall temperature, ambient temperature of the intake pipe wall, and the time elapsed from the start of the engine.

15. A method according to any of claims 1 to 14, wherein the estimated parameter is the intake pipe wall temperature, and the input information includes at least one of the cooling water temperature, cylinder block temperature, and oil temperature.

16. A method according to any of claims 1 to 9, wherein the estimated parameter is the exhaust air-fuel ratio, the input information includes at least one of the time sequential data of the crank angle speed, engine revolution, intake air rate, intake air vacuum, ignition timing, opening and closing timings of intake and exhaust valves a variable valve timing device is used, and EGR valve opening in the case an EGR control is used.

17. A method according to any of claims 1 to 15, wherein the estimated parameter is the exhaust air-fuel ratio, and the input information includes at least one of the exhaust temperature, atmospheric temperature, engine revolution, intake air rate, intake air vacuum, ignition timing, and the throttle valve opening.

18. A method according to any of claims 1 to 17, wherein the estimated parameter is the air-fuel ratio around the plug ignition point in the in-cylinder injection type of engine, and the input information includes at least one of the engine revolution, throttle opening, fuel injection rate, fuel injection timing, ignition timing, and opening and closing timings of intake and exhaust vales in the case a variable valve timing device is used.

19. A method according to any of claims 8 to 10, wherein the estimated parameter is the amount of NOx contained in exhaust gas in the exhaust catalyst system, and the input information includes at least one of the engine revolution, throttle opening, cooling water temperature, gas temperature at the catalyst inlet, gas temperature at the catalyst outlet, traveled distance, and the exhaust air-fuel ratio.

20. A method according to any of claims 1 to 19, wherein the estimated parameter is the sensory evaluation value about the engine state, and the input information includes at least one of the user's data on the pulses, heartbeats, blood pressures, breathing intervals, brain waves.

21. A method according to any of claims of 1 to 20, wherein said fuzzy neural network uses six processing layers.

22. A method according to any of claims 1 to 21, wherein said fuzzy network uses the first through fourth layers for constituting an antecedent portion and the fifth and sixth layers for constituting a consequent portion.

23. A method according to any of claims 1 to 22, wherein pieces of input portions are divided into the membership functions, each defined by the equation

$$f(x) = 1/1 + epx(-wg(xi + wc)),$$

wherein wg represents the gradient of the sigmoid function and wc represents the central portion of the sigmoid function, which are used as coupling factors.

24. A method according to any of claims 1 to 23, wherein said estimation process is carried out during the execution of the control.

25. An engine control device including a fuzzy neural network for estimating an engine control parameter based on engine control parameters different from the estimated parameter as input information to said fuzzy neural network, wherein said engine control device being adapted to perform an optimization of the estimation in accordance with any of claims 1 to 23.

**Patentansprüche**

1. Verfahren zum automatischen Optimieren der Anzahl und Arten von Eingangsinformationen für ein neuronales Fuzzy- Netzwerk, das einen Motorsteuerparameter abschätzt, mit den Schritten von:

   Erzeugen einer ersten Generation einer Mehrzahl von Individuen durch Kodieren der Eingabeinformationseingabe an das neuronale Fuzzy- Netzwerk (Schritt 1),

   Ausführen eines Lemvorganges des neuronalen Fuzzy- Netzwerkes zum Reduzieren eines Schätzfehlers zwischen dem erfassten Parameter und dem tatsächlich gemessenen Parameterwert für jedes Individuum (Schritt 2),

   Berechnen eines Bewertungswertes für jedes Individuum auf der Grundlage eines abgeschätzten Fehlers für jedes Individuum (Schritt 3),

   Bestimmen, ob ein Schätzfehler des Individuums, das den höchsten Bewertungswert hat, kleiner als ein Toleranzwert ist (Schritt 4),

wobei, falls bestimmt worden ist, dass der Schätzfehler kleiner als der Toleranzwert ist, die Eingabeinformation auf der Grundlage des Individuums, das den höchsten Überprüfungswert hat, festgelegt wird,
wobei, falls bestimmt worden ist, dass der Schätzfehler größer als der Toleranzwert ist, zwei Elternindividuen aus der gegenwärtigen Generation ausgewählt werden, um eine Mehrzahl von Individuen einer nächsten Generation (Schritt 5) durch Kreuzen der Elternindividuen (Schritt 6) zu erzeugen, wobei die erzeugten Individuen per Zufall verändert werden (Schritt 7) und die Optimierungsschritte (Schritte 2 - 7) wiederholt werden, bis der Schätzfehler kleiner als der Toleranzwert wird.

2. Verfahren nach Anspruch 1, wobei das Verfahren außerdem ein Kopplungswertigkeit (wf) des neuralen Fuzzy- Netzwerkes, die während des Lernschrittes (Schritt 2) abgeschätzt wird, wobei die Kopplungswertigkeit (wf) zusammen mit dem Festlegen der Eingabeinformation festgelegt wird.

3. Verfahren nach Anspruch 1 oder 2, außerdem mit dem Schritt des Vorbereitens einer mehrfachen Anzahl von Eingabekandidatendaten für das neuronale Fuzzy-Netzwerk im Voraus, wobei jedes Individuum durch eine Mehrzahl von Genen gebildet wird und jedes Gen anzeigt, ob Eingabekandidatendaten verwendet werden, oder nicht.

**4.** Verfahren nach einem der Ansprüche 1 bis 3, wobei der Lernschritt (Schritt 2 und 3) in einer bestimmten Anzahl ausgeführt wird.

**5.** Verfahren nach einem der Ansprüche 1 bis 4, wobei der Lernschritt (Schritt 2 und 3) eine Rückausbreitung ausführt.

**6.** Verfahren nach einem der Ansprüche 1 bis 5, wobei die Auswahl der Elterneindividuen (Schritt 5) in der Form einer Roulette- Auswahl ausgeführt wird,

**7.** Verfahren nach einem der Ansprüche 1 bis 6, wobei das Kreuzen der Elterneindividuen (Schritt 6) als ein Einpunkt- Kreuzen, Zweipunkt- Kreuzen oder Normalverteilungs- Kreuzen ausgeführt wird.

**8.** Verfahren nach einem der Ansprüche 1 bis 7, wobei der Schritt der Erzeugung von Individuen der nächsten Generation den Schritt des Hinzufügens des Individuums zu den für die nächste Generation erzeugten Individuen enthält, das den höchsten Bewertungswert hat.

**9.** Verfahren nach einem der Ansprüche 1 bis 8, wobei der Schritt der Veränderung der Individuen per Zufall (Schritt 7) Veränderungen mit einer bestimmten Wahrscheinlichkeit veranlasst.

**10.** Verfahren nach einem der Ansprüche 1 bis 9, wobei der abgeschätzte Parameter die Einlassluftgeschwindigkeit ist und die Eingabeinformation eine mehrfache Anzahl von Daten über zumindest das Einlassluftvakuum des Motors enthält.

**11.** Verfahren nach einem der Ansprüche 1 bis 10, wobei der abgeschätzte Parameter die Kraftstoffadhäsionsrate in einem Motor mit Ansaugrohr- Einspritzung ist, und die Eingabeinformation zumindest eines von Motordrehzahl, die Einlassluftgeschwindigkeit oder das Ansaugluftvakuum enthält.

**12.** Verfahren nach einem der Ansprüche 1 bis 11, wobei der abgeschätzte Parameter die Verdampfungszeitkonstante in einem Motor mit Ansaugrohr-Einspritzung ist, und die Eingabeinformation zumindest die eines von Ansaugrohr- Wandtemperatur, Motordrehzahl, Einlassluftrate oder das Ansaugluftvakuum enthält.

**13.** Verfahren nach einem der Ansprüche 1 bis 12, wobei der abgeschätzte Parameter der Veränderungsbetrag des Drehmomentes ist, und die Eingabeinformation zumindest eines von Veränderung in der Motordrehzahl, Motordrehzahl, Einlassluftrate oder die zeitliche Abfolge von Daten des Brennkammerdrucks enthält.

**14.** Verfahren nach einem der Ansprüche 1 bis 13, wobei der abgeschätzte Parameter die Brennkammertemperatur ist, und die Eingabeinformation zumindest einer von Ansaugrohr- Wandtemperatur, Umgebungstemperatur der Einlassrohrwand oder die von dem Start des Motors verstrichene Zeit enthält.

**15.** Verfahren nach einem der Ansprüche 1 bis 14, wobei der abgeschätzte Parameter die Einlassrohr- Wandtemperatur ist, und die Eingabeinformation zumindest eines von Kühlwassertemperatur, Zylinderblocktemperatur oder Öltemperatur enthält.

**16.** Verfahren nach einem der Ansprüche 1 bis 9, wobei der abgeschätzte Parameter das Luft- Kraftstoffverhältnis im Abgas ist, die Eingabeinformation zumindest eine von zeitlicher Abfolge von Daten der Kurbelwinkelgeschwindigkeit, Motordrehzahl, Einlassluftrate, Einlassluftvakuum, Zündzeitpunkt, Öffnungs- oder Schließzeitpunkte der Einlass- und Auslassventile einer veränderbaren Ventilzeitpunktvorrichtung verwendet wird, oder das EGR-Ventilöffnen in dem Fall einer EGR-Steuerung verwendet wird.

**17.** Verfahren nach einem der Ansprüche 1 bis 15, wobei der abgeschätzte Parameter das Luft- Kraftstoffverhältnis im Abgas ist, und die Eingabeinformation zumindest eine von Abgastemperatur, Atmosphärentemperatur, Motordrehzahl, Einlassluftrate, Einlassluftvakuum, Zündzeitpunkt oder Drosselventilöffnung enthält.

**18.** Verfahren nach einem der Ansprüche 1 bis 17, wobei der abgeschätzte Parameter das Luft- Kraftstoffverhältnis rund um den Zündkerzenpunkt in dem Motor vom Inzylinder- Einspritztyp ist, und die Eingabeinformation zumindest eines von Motordrehzahl, Drosselöffnung, Kraftstoffeinspritzrate, Kraftstoffeinspritzzeitpunkt, Zündzeitpunkt oder die Öffnungs- und Schließzeitpunkte der Einlass- und Auslassventile in dem Fall enthält, dass eine veränderbare Ventilzeitpunktvorrichtung verwendet wird.

**19.** Verfahren nach einem der Ansprüche 8 bis 10, wobei der abgeschätzte Parameter die Menge von NOx ist, enthalten in dem Abgas in dem Abgaskatalysatorsystem, und die Eingabeinformation zumindest eines von Motordrehzahl, Drosselöffnung, Kühlwassertemperatur, Gastemperatur an dem Katalysatoreinlass, Gastemperatur an dem Katalysatorauslass, Fahrstrecke oder das Luft- Kraftstoffverhältnis im Abgas enthält.

**20.** Verfahren nach einem der Ansprüche 1 bis 19, wobei der abgeschätzte Parameter der sensorische Bewertungswert über den Motorzustand ist, und die Eingabeinformation zumindest eines von den Daten des Benutzers Puls, Herzschlag, Blutdruck, Atmungsintervalle, Hirnstromwellen enthält.

21. Verfahren nach einem der Ansprüche 1 bis 20, wobei das neuronale Fuzzy-Netzwerk sechs Verarbeitungsschichten verwendet.

22. Verfahren nach einem der Ansprüche 1 bis 21, wobei das neuronale Fuzzy-Netzwerk die erste bis vierte Schicht zum Bilden eines vorhergehenden Abschnittes und die fünfte und sechste Schicht zum Bilden eines nachfolgenden Abschnittes verwendet.

23. Verfahren nach einem der Ansprüche 1 bis 22, wobei die Teile von Eingabeabschnitten geteilt werden in Teilnehmerfunktionen, jede durch die Gleichung gebildet

$$f(x) = 1/1 + epx(-wg(xi + wc)),$$

wobei wg den Gradienten der Sigmoid- Funktion repräsentiert und wc den Mittelabschnitt der Sigmoid-Funktion repräsentiert, die als Kopplungsfaktoren verwendet werden.

24. Verfahren nach einem der Ansprüche 1 bis 23, wobei der Abschätzungsprozeß während der Durchführung der Steuerung ausgeführt wird.

25. Motorsteuervorrichtung, die ein neuronales Fuzzy-Netzwerk enthält, um einen Motorsteuerparameter auf der Grundlage von Motorsteuerparametem abzuschätzen, die von dem abgeschätzten Parameter verschieden sind, als Eingabeinformation in das neuronale Fuzzy- Netzwerk, wobei die Motorsteuervorrichtung vorgesehen ist, eine Optimierung der Schätzung in Übereinstimmung mit einem der Ansprüche 1 bis 23 vorzunehmen.

## Revendications

1. Procédé d'optimisation automatique de nombre et de types d'informations d'entrée destinés à un réseau neural flou estimant un paramètre de commande pour un moteur, comprenant les étapes de :

génération d'une première génération d'une pluralité d'individus par codage de l'information d'entrée entrée dans le réseau neural flou (étape 1) ;
exécution d'une opération d'apprentissage du réseau neural flou afin de réduire une erreur d'estimation entre le paramètre estimé et la valeur de paramètre réel mesurée pour chaque individu (étape 2) ;

calcul d'une valeur d'évaluation pour chaque commande séparée d'après une erreur d'estimation pour chaque individu (étape 3) ;
détermination si une erreur d'estimation de l'individu ayant la valeur d'évaluation la plus élevée est plus faible qu'une valeur de tolérance (étape 4) ;
s'il a été déterminé que l'erreur d'estimation est inférieure à la valeur de tolérance, l'information d'entrée est définie d'après l'individu qui a la valeur d'évaluation la plus élevée ;
s'il a été déterminé que l'erreur d'estimation est plus élevée que la valeur de tolérance, deux individus parents sont sélectionnées à partir de la génération actuelle pour destinée à produire une pluralité d'individus d'une génération suivante (étape 5) par croisement des individus parents (étape 6), les produits sont modifiées de manière aléatoire (étape 7) et les étapes d'optimisation (étapes 2 à 7) se répètent jusqu'à ce que l'erreur d'estimation devienne inférieure à la valeur de tolérance.

2. Procédé selon la revendication 1, dans lequel ledit procédé détermine en outre un poids de couplage (wf) du réseau neural flou devant être estimé au cours de l'étape d'apprentissage (étape 2), dans lequel ledit poids de couplage (wf) est défini conjointement avec la définition de l'information d'entrée.

3. Procédé selon la revendication 1 ou la revendication 2, comprenant en outre l'étape de préparation à l'avance d'un nombre pluriel de données d'entrée candidates destinées au réseau neural flou, dans lequel chaque individu est formé par une pluralité de gènes et dans lequel chaque gène indique si une donnée d'entrée candidate est utilisée ou non.

4. Procédé selon l'une quelconque des revendications 1 à 3, dans lequel ladite étape d'apprentissage (étapes 2 et 3) est effectuée un nombre de fois spécifié.

5. Procédé selon l'une quelconque des revendications 1 à 4, dans lequel ladite étape d'apprentissage (étapes 2 et 3) exécute une propagation en retour.

6. Procédé selon l'une que lconque des revendications 1 à 5, dans lequel la sélection des individus (étape 5) est effectuée sous la forme d'un choix par roulette.

7. Procédé selon l'une quelconque des revendications 1 à 6, dans lequel le croisement des individus parents (étape 6) est effectué par croisement par un point, par croisement par deux points ou par croisement par répartition normale.

8. Procéde selon l'une quelconque des revendications 1 à 7, dans lequel l'étape de production d'individus de la génération suivante comprend l'étape d'addition de d'individu qui a la valeur d'évaluation la plus élevée aux individus produits pour la génération suivante.

9. Procédé selon l'une quelconque des revendications 1 à 8, dans lequel l'étape de modification des individus de manière aléatoire (étape 7) provoque des modifications suivant une certaine probabilité.

10. Procédé selon l'une quelconque des revendications 1 à 9, dans lequel le paramètre estimé est le taux d'admission d'air, et dans lequel l'information d'entrée comprend un nombre pluriel de données sur au moins la dépression de l'air à l'admission du moteur.

11. Procédé selon l'une quelconque des revendications 1 à 10, dans lequel le paramètre estimé est le coefficient d'adhérence du carburant dans une tubulure d'amission d'un moteur de type à injection, et dans lequel l'information d'entrée comprend au moins l'un du régime moteur, du coefficient d'admission d'air et de la dépression de l'air à l'admission.

12. Procédé selon l'une quelconque des revendications 1 à 11, dans lequel le paramètre estimé est une constante en temps d'évaporation dans une tubulure d'admission d'un moteur de type à injection, et dans lequel l'information d'entrée comprend au moins l'un de la température de paroi de tubulure d'admission, du régime moteur, du coefficient d'air à l'admission et de la dépression de l'air à l'admission.

13. Procédé selon l'une quelconque des revendications 1 à 12, dans lequel le paramètre estimé est la valeur de variation du couple, et dans lequel l'information d'entrée comprend au moins l'un de la variation du régime moteur, du régime moteur, du coefficient d'air à l'admission et des données séquentielles en temps de la pression de la chambre de combustion.

14. Procédé selon l'une quelconque des revendications 1 à 13, dans lequel le paramètre estimé est la température de la chambre de combustion, et dans lequel l'information d'entrée comprend au moins l'un de la température de paroi de tubulure d'admission, de la température ambiante de la paroi de tubulure d'admission et du temps qui s'est écoulé à partir de la mise en marche du moteur.

15. Procédé selon l'une quelconque des revendications 1 à 14, dans lequel le paramètre estimé est la température de la paroi d'une tubulure d'admission, et dans lequel l'information d'entrée comprend au moins l'un de la température de l'eau de refroidissement, de la température du bloc cylindres et de la température de l'huile.

16. Procédé selon l'une quelconque des revendications 1 à 9, dans lequel le paramètre estimé est le rapport air / carburant à l'échappement, dans lequel l'information d'entrée comprend au moins l'un des données séquentielles en temps de la vitesse d'angle de vilebrequin, du régime moteur, du coefficient d'air à l'admission, de la dépression de l'air à l'admission, du calage de l'allumage, des calages d'ouverture et de fermeture des soupapes d'admission et d'échappement, lorsqu'un dispositif de calage de soupapes variable est utilisé, et une ouverture de soupape EGR (recirculation des gaz d'échappement) dans le cas où une commande EGR est utilisée.

17. Procédé selon l'une quelconque des revendications 1 à 15, dans lequel le paramètre estimé est le rapport air / carburant, et dans lequel l'information d'entrée comprend au moins l'un de la température d'échappement, de la pression de l'atmosphère, du régime moteur, du coefficient d'admission d'air, de la dépression de l'air à l'admission, du calage de l'allumage et de l'ouverture du papillon des gaz.

18. Procédé selon l'une quelconque des revendications 1 à 17, dans lequel le paramètre estimé est le rapport air / carburant autour du point d'allumage de la bougie dans le moteur de type à cylindres à injection, et dans lequel l'information d'entrée comprend au moins l'un du régime moteur, de l'ouverture du papillon des gaz, du débit d'injection de carburant, de calage d'injection de carburant, de calage d'allumage et des calages d'ouverture et de fermeture des soupapes d'admission et d'échappement dans le cas où un dispositif de calage de soupapes variable est utilisé.

19. Procédé selon l'une quelconque des revendications 8 à 10, dans lequel le paramètre estimé est la valeur de NOx contenu dans les gaz d'échappement se trouvant dans le système d'échappement à catalyseur, et dans lequel l'information d'entrée comprend au moins l'un du régime moteur, de l'ouverture du papillon des gaz, de la température de l'eau de refroidissement, de la température des gaz à l'admission du catalyseur, de la température des gaz à la sortie du catalyseur, de la distance parcourue et du rapport air / carburant à l'échappement.

20. Procédé selon l'une quelconque des revendications 1 à 19, dans lequel le paramètre estimé est la valeur d'évaluation sensorielle concernant la condition du moteur, et dans lequel l'information d'entrée comprend au moins l'une des données d'utilisateur concernant les pulsations, les battements cardiaques, les pressions sanguines, les intervalles de respiration et les ondes cérébrales.

**21.** Procédé selon l'une quelconque des revendications 1 à 20, dans lequel ledit réseau neural flou utilise six couches de traitement.

**22.** Procédé selon l'une quelconque des revendications 1 à 21, dans lequel ledit réseau neural flou utilise les première à quatrième couches afin de constituer une partie précédente et les cinquième et sixième couche afin de constituer une partie suivante.

**23.** Procédé selon l'une quelconque des revendications 1 à 22, dans lequel des pièces de parties d'entrée sont divisées en fonctions d'appartenance, chacune étant définie par l'équation $f(x) = 1 / 1 + epx (-wg (xi + wc))$, dans laquelle wg représente le gradient de la fonction sigmoïde et wc représente la partie centrale de la fonction sigmoide, qui sont utilisés en tant que facteurs de couplage.

**24.** Procédé selon l'une quelconque des revendications 1 à 23, dans lequel ledit processus d'estimation est effectué au cours de l'exécution de la commande.

**25.** Dispositif de commande pour moteur comprenant un réseau neural flou destiné à estimer un paramètre de commande de moteur d'après des paramètres de commande de moteur différents du paramètre estimé en tant qu'information d'entrée dans ledit réseau neural flou, dans lequel ledit dispositif de commande de moteur est adapté afin de réaliser une optimisation de l'estimation selon l'une quelconque des revendications 1 à 23.

[FIG. 1]

Fuel tank

Pressure regulator

Filter

Fuel pump

3

15

10

14

16

2

13

5

4

12

1

7

6

11

EP 0 962 871 B1

[FIG. 2]

Injection fuel

Fuel injection device

engine

Control unit

Injection signal

Model base control section

Engine revolution

Engine revolution calculating section

Data processing section

Crank angle signal

Intake air pressure

Intake pipe wall temperature

Exhaust air-fuel ratio

[FIG. 3]

```
Crank angle signal ──→ [Period measuring section] ──→ [Period/revolution converting section] ──→ Engine revolution
```

EP 0 962 871 B1

[FIG. 4]

Intake air pressure

Per stroke average pressure calculating section

Per stroke minimum pressure calculating section

Per stroke average pressure

Per stroke minimum pressure

21

[FIG. 5]

[FIG. 6]

[FIG. 7]

```
                    ┌─────────────────┐
                    │      Start      │
                    └─────────────────┘
                             │
   Step 1                    ▼
                    ┌─────────────────┐
                    │  Create initial │
                    │   individuals   │
                    └─────────────────┘
                             │
   Step 2                    ▼
                    ┌─────────────────┐
                    │  Learn every FNN│
                    └─────────────────┘
                             │
   Step 3                    ▼
                    ┌─────────────────────────┐
                    │ Calculate every individual's│
                    │   evaluation value      │
                    └─────────────────────────┘
                             │
   Step 4                    ▼
                    ◇ Error < Tolerance ◇──────────┐
                             │                     ▼
   Step 5                    ▼              ┌─────────────┐
                    ┌─────────────────┐     │     End     │
                    │  Select parent  │     └─────────────┘
                    │   individual    │
                    └─────────────────┘
                             │
   Step 6                    ▼
                    ┌─────────────────┐
                    │  Create (Cross) │
                    │ child individuals│
                    └─────────────────┘
                             │
   Step 7                    ▼
                    ┌─────────────────┐
                    │Manipulate mutation│
                    └─────────────────┘
```

[FIG. 8]

EP 0 962 871 B1

| 1 | 1 | 0 | · · · · | 0.3 | 0.5 | 0.8 | · · · · | 1.2 | 1.5 | 3.5 | · · · · | 4 | 4 | 0 | · · · · |

Shows if input candidate
is used/unused.
    0: Not used for input data
    1: Used for input data

Shows central position
(Wc) of sigmoid function.

Shows gradient
(Wg) of sigmoid function.

Number of membership
functions

Candidate data to be input to FNN

1. Per stroke average pressure
2. Per stroke minimum pressure
3. Per stroke maximum pressure
4. Intake air pressure at specific
   crank angle
5. Minimum-to-maximum pressure
   changing time
6. Maximum-to-minimum pressure
   changing time
7. Maximum-to-minimum differential
   pressure
8. Pulsation amplitude
9. Pulsation period

[FIG. 9]

[FIG. 10]

EP 0 962 871 B1

[FIG. 11]

28

[FIG. 12]

Estimated intake air rate （Ae）
Estimated intake fuel rate （Fe）

$$\frac{Ae}{Fe}$$

Estimated air-fuel ratio

[FIG. 13]

Intake air rate changing rate

Estimated intake air rate →

Changing rate calculating section → Target air-fuel ratio map → Target air-fuel ratio

[FIG. 14]

Target air-fuel ratio

Estimated air-fuel ratio

e

Kp· e

Kp: Feedback gain

Injection fuel rate

[FIG. 15]

[FIG. 16]

[FIG. 17]

Per stroke average pressure

Per stroke minimum pressure

Per stroke maximum pressure

Pressure at specific crank angle

Minimum-to-maximum changing time

Per stroke average pressure calculating section

Per stroke minimum pressure calculating section

Per stroke maximum pressure calculating section

Section for calculating pressure at specific crank angle

Minimum-to-maximum changing time calculating section

Intake air pressure

[FIG. 18]

[FIG. 19]

[FIG. 20]

EP 0 962 871 B1

[FIG. 21]

| 1 | 1 | O | · · · · · |

· Shows if input candidate is used/unused.

0: Not used for input data
1: Used for input data

Candidate data to be input to FNN

1. Per stroke average pressure
2. Per stroke minimum pressure
3. Per stroke maximum pressure
4. Intake air pressure at specific crank angle
5. Minimum-to-maximum pressure changing time
6. Maximum-to-minimum pressure changing time
7. Maximum-to-minimum differential pressure
8. Pulsation amplitude
9. Pulsation period

[FIG. 22]

[FIG. 23]

[FIG. 24]

[FIG. 25]

[FIG. 26]

EP 0 962 871 B1

FNN

Time sequential data of crank angular acceleration

Crank angular acceleration at crank angle a →
Crank angular acceleration at crank angle b →
Crank angular acceleration at crank angle c →

Crank angular acceleration at crank angle n →

Engine revolution →

Intake air rate →

Intake air vacuum →

Ignition timing →

Valve timing opening →
(if VTT is controlled)

EGR valve control →
(if EGR is controlle)

$W_c$   $W_t$   $W_f$

→ Estimated exhaust air-fuel ratio

[FIG. 27]

[FIG. 28]

FNN

Air-fuel ratio around
plug ignition point
(Estimated Value)

Engine revolution
Throttle opening
Fuel injection rate
Fuel injection timing
Ignition timing
Valve timing opening
(if VTT is controlled)

[FIG. 29]

Content of Nox in exhaust (Estimated value)

FNN

Engine revolution
Throttle opening
Cooling water temperature
Gas temperature at catalyst inlet
Gas temperature at catalyst outlet
Traveled distance
Exhaust air-fuel ratio

[FIG. 30]